# EUROPEAN PATENT SPECIFICATION

(11) **EP 2 277 828 B1**
(45) Date of publication and mention of the grant of the patent: **08.08.2018**
(21) Application number: 09727078.9
(22) Date of filing: 26.03.2009
(51) Int. Cl.: C01B 25/45, H01M 4/02, H01M 4/58

(54) **LITHIUM IRON PHOSPHATE POWDER MANUFACTURING METHOD, OLIVINE STRUCTURED LITHIUM IRON PHOSPHATE POWDER, CATHODE SHEET USING SAID LITHIUM IRON PHOSPHATE POWDER, AND NON-AQUEOUS SOLVENT SECONDARY BATTERY**
VERFAHREN ZUR HERSTELLUNG VON LITHIUMEISENPHOSPHATPULVER, LITHIUMEISENPHOSPHATPULVER MIT OLIVINSTRUKTUR, KATHODENBLECH UNTER VERWENDUNG DES LITHIUMEISENPHOSPHATPULVERS UND SEKUNDÄRBATTERIE MIT NICHTWÄSSRIGEM LÖSUNGSMITTEL
PROCÉDÉ DE PRÉPARATION D UNE POUDRE DE PHOSPHATE DE LITHIUM-FER, POUDRE DE PHOSPHATE DE LITHIUM-FER À STRUCTURE OLIVINE, FEUILLE DE CATHODE UTILISANT LADITE POUDRE DE PHOSPHATE DE LITHIUM-FER ET BATTERIE SECONDAIRE À SOLVANT NON AQUEUX

(30) Priority: 31.03.2008 JP 2008094056
(43) Date of publication of application: 26.01.2011
(73) Proprietor: Toda Kogyo Corp., Hiroshima-shi, Hiroshima 732-0828 (JP)
(72) Inventor: MISHIMA, Yuji, Otake-shi Hiroshima 739-0652 (JP); HONDA, Shingo, Otake-shi Hiroshima 739-0652 (JP); KONO, Yoshiteru, Onoda-shi Yamaguchi 756-0847 (JP); SATO, Kouta, Otake-shi Hiroshima 739-0652 (JP); OKAZAKI, Seiji, Otake-shi Hiroshima 739-0652 (JP); KATAMOTO, Tsutomu, Otake-shi Hiroshima 739-0652 (JP)
(74) Representative: J A Kemp
(86) International application number: PCT/JP2009/001374
(87) International publication number: WO 2009/122686

(56) References cited:
- WO-A1-2008/023908
- JP-A- 2004 079 276
- JP-A- 2006 347 805
- JP-A- 2007 022 894
- JP-A- 2007 230 784

## Description

### TECHNICAL FIELD

The present invention relates to lithium iron phosphate particles having an olivine type structure which are capable of being readily produced at low costs and providing a secondary battery having large charge and discharge capacities, and are excellent in packing properties and charge and discharge cycle characteristics, and a positive electrode sheet and a secondary battery using the lithium iron phosphate particles.

### BACKGROUND ART

With the recent rapid development of portable and cordless apparatuses and devices including electronic equipments such as audio-visual (AV) devices and personal computers and power tools such as electric tools, there is an increasing demand for secondary batteries or batteries having a small size, a light weight and a high energy density as power sources for driving these electronic devices. Also, in consideration of global environments, electric and hybrid electric vehicles have been recently developed and been utilized, so that there is an increasing demand for lithium ion secondary batteries having excellent charge and discharge cycle characteristics which are usable in large-size applications. Under these circumstances, lithium ion secondary batteries having advantages such as large charge and discharge capacities and a good safety have been noticed.

In recent years, as positive electrode active materials useful for high energy-type lithium ion secondary batteries at 3.5 V vs. lithium, olivine-type LiFePO₄ has been noticed because this material can provides a cell or battery having high charge and discharge capacities. However, the olivine-type LiFePO₄ tends to inherently exhibit an electric resistance as high as 10⁹ Ω•cm and a poor packing property when used as an electrode. Therefore, it has been required to improve their properties.

That is, LiFePO₄ having an olivine type structure comprises rigid PO₄³⁻ tetrahedral polyanions, an oxygen octahedral structure having an iron ion with a redox reaction thereof, and a lithium ion as an electrical carrier. The LiFePO₄ having such a crystal structure can stably retain its crystal structure even when subjected to repeated charge and discharge reactions, and has such an advantage that characteristics of the LiFePO₄ tend to be hardly deteriorated as compared other lithium ion positive electrode materials even when exposed to repeated charge and discharge cycles. On the other hand, the LiFePO₄ has disadvantages such as one-dimensional diffusion path of the lithium ion and a high electric resistance owing to a less number of free electrons therein. To solve these problems, studies have been conducted to provide fine particles of olivine type LiFePO₄ having a primary particle diameter of 200 to 300 or less and various materials obtained by substituting a part of the olivine type LiFePO₄ with different kinds of elements, although no productivity of the olivine type LiFePO₄ are taken into consideration (Non-Patent Documents 1 to 5).

The above LiFePO₄ tends to have higher charge and discharge characteristics under a high electric current load as a primary particle diameter of LiFePO₄ particles becomes smaller. Therefore, in order to obtain an excellent positive electrode formed of the olivine type LiFePO₄ composite oxide, it is required to control an aggregating condition of the olivine type LiFePO₄ particles such that the olivine type LiFePO₄ composite oxide is present in the form of an adequately aggregated particles and forms a suitable network with a conductive assistant such as graphitized carbon. However, the positive electrode formed of a composite material comprising a large amount of carbon, etc., is very bulky, and has such a problem that a packing density of lithium ions per unit volume of the positive electrode material is substantially lowered. Under this circumstance, in order to ensure adequate charge and discharge capacities per unit volume of the positive electrode material, it has been required to obtain an olivine type LiFePO₄ having a small electric resistance and form an aggregate thereof having a high density with a small amount of the conductive assistant.

In the process for producing the olivine type LiFePO₄, in order to obtain the small primary particles having a high packing property and a less content of amorphous moieties therein, it has been required that iron oxide fine particles or iron oxide-hydroxide fine particles are used as raw materials and sintered at low temperature for a short period of time in inert or reducing atmospheres. The raw materials have high solid state reactivity, are well-controlled in content of impurities therein, and are obtained, in particular, by a wet synthesis method.

That is, as active materials of positive electrode for non-aqueous electrolyte secondary batteries, it has been demanded to produce the olivine type LiFePO₄ having a high packing property, a less content of impurity phases and a small electric resistance by an industrially effective method with a small environmental burden.

Conventionally, there have been proposed various methods for improving properties of the olivine type LiFePO₄ composite oxide. For example, there are known techniques of reducing an electric resistance of the olivine type LiFePO₄ by adding different kinds of metal elements thereto (Patent Document 1); techniques of forming a composite material of the olivine type LiFePO₄ and carbon by enhancing the tap density upon production thereof (Patent Document 2); techniques of obtaining a positive electrode active material by adding different kinds of metal elements and by using trivalent iron-containing raw materials (Patent Document 3); techniques of using a trivalent iron-containing compound as a raw material (Patent Document 4); or the like.

Patent Document 1: Japanese Patent Application Laid-open (KOKAI) No. 2005-514304
Patent Document 2: Japanese Patent Application Laid-open (KOKAI) No. 2006-032241
Patent Document 3: Japanese Patent Application Laid-open (TOKUHYO: Japanese translation of International Patent Application (PCT)) No. 2003-520405
Patent Document 4: Japanese Patent Application Laid-open (KOKAI) No. 2006-347805
Non-Patent Document 1: A. Yamada, et al., "J. Electrochem. Soc.", 2001, Vol. 148, pp. A224-229
Non-Patent Document 2: H. Huang, et al., "Electrochem. and Solid-State Lett.", 2001, Vol. 4, pp. A170-172
Non-Patent Document 3: Zhaohui Chen, et al., "J. Electrochem. Soc.", 2002, Vol. 149, pp. A1184-1189
Non-Patent Document 4: D. Morgan, et al., "Electrochem. and Solid-State Lett.", 2004, Vol. 7, pp. A30-32
Non-Patent Document 5: M. Saiful Islam, et al., "Chem. Mater.", 2005, Vo9l. 17, pp. 5085-5092

### DISCLOSURE OF THE INVENTION

### PROBLEM TO BE SOLVED BY THE INVENTION

At present, it has been strongly required to provide a process for producing the olivine type LiFePO₄ which is capable of satisfying various properties required as a positive electrode active material for a non-aqueous electrolyte secondary battery, at low costs with a less environmental burden. However, such a production process has not been established until now.

That is, the techniques described in the above Non-Patent Documents 1 to 5, have failed to produce the olivine type LiFePO₄ having a high packing property and a less content of amorphous moieties and comprising small primary particles in an industrially manner.

Also, in the techniques described in Patent Document 1 in which the other kinds of metals are added to the olivine type LiFePO₄ composite oxide to stabilize the structure thereof and to reduce the electric resistance, there is no explanation of the packing properties and control of secondary aggregation condition thereof.

In addition, the techniques described in Patent Document 2 in which an aggregate of the olivine type LiFePO₄ composite oxide and carbon is formed upon production of the composite oxide, have failed to provide a cell having a high performance.

Further, in the techniques described in Patent Document 3, the iron oxide used as a raw material tends to be insufficient in solid state reactivity, so that it may be difficult to synthesize fine primary particles.

Also, in the techniques described in Patent Document 4, the general inexpensive trivalent iron-containing compound is used as a raw material, and the synthesis reaction is allowed to proceed while maintaining a shape of the particles. However, the iron oxide particles used therein have a large particle diameter, so that the ion diffusion efficiency upon the solid state reaction tends to be lowered.

Accordingly, an object of the present invention is to provide and establish a process for producing the olivine type LiFePO₄ having a high packing property and a less content of impurity phases, in an industrially efficient manner with a less environmental burden, and to provide a secondary battery comprising a positive electrode material having a high packing property which exhibits a high capacity even at high rate and can be used repeatedly at charge and discharge cycles.

### MEANS FOR SOLVING THE PROBLEM

The above technical problems can be solved by the following present invention.

That is, in accordance with the present invention, there is provided a process for producing lithium iron phosphate particles having an olivine type structure, comprising:
a first step of mixing an iron oxide or an iron oxide hydroxide as an iron raw material which comprises at least one element selected from the group consisting of Na, Mg, Al, Si, Cr, Mn and Ni in an amount of 0.1 to 2 mol% for each element based on Fe, and C as a carbon element in an amount of 5 to 10 mol% based on Fe, and has a content of Fe²⁺ of not more than 40 mol% based on an amount of Fe and wherein the iron raw material has an average primary particle diameter of 5 to 300 nm, with a lithium raw material and a phosphorus raw material;
a second step of controlling agglomerates diameter in the resulting mixture to 0.3 to 5.0 µm; and
a third step of sintering the mixture obtained in the second step in an inert gas or reducing gas atmosphere having an oxygen concentration of not more than 0.1% at a temperature between 250 to 750°C.

Also, according to the present invention, there is provided the process for producing lithium iron phosphate particles having an olivine type structure according to the invention, wherein the iron raw material comprises at least one element selected from the group consisting of Na, Mg, Al, Si, Cr, Mn and Ni in an amount of 0.1 to 2 mol% for each element based on Fe with the proviso that a total amount of the seven elements is 1.5 to 4 mol% based on Fe, and a carbon element C in an amount of 5 to 10 mol% based on Fe, and includes at least one compound selected from the group consisting of Fe₃O₄, α-FeOOH, γ-FeOOH and δ-FeOOH which has an average primary particle diameter of 5 to 300 nm.

Also, according to the present invention, there is provided the process for producing lithium iron phosphate particles having an olivine type structure as described above, wherein the iron raw material comprises at least one element selected from the group consisting of Na, Mg, Al, Si, Cr, Mn and Ni in an amount of 0.1 to 2 mol% for each element based on Fe with the proviso that a total amount of the seven elements is 1.5 to 4 mol% based on Fe, and a carbon element C in an amount of 5 to 10 mol% based on Fe, and the iron raw material is in the form of an acicular iron raw material having an average primary particle diameter of 5 to 300 nm and an aspect ratio of a major axis diameter to a minor axis diameter of not less than 2.

Preferably, according to the present invention, in the process for producing lithium iron phosphate particles having an olivine type structure, the additive element C in the iron raw material is present in the form of an organic substance capable of reducing Fe³⁺ to Fe²⁺ in an inert gas atmosphere having an oxygen concentration of not more than 0.1%.

More preferably, according to the present invention, the process for producing lithium iron phosphate particles having an olivine type structure further comprises a step A of mixing at least one material selected from the group consisting of a conductive carbon, an organic substance having a capability of reducing Fe³⁺ to Fe²⁺ and an organic binder which serve as an electronic conduction assistant for the lithium iron phosphate particles produced, a reducing agent for reducing Fe³⁺ in the iron raw material to Fe²⁺, and a controlling agent for adjusting agglomerates diameter of a precursor of the particles to 0.3 to 30 µm, respectively, the step A being carried out either during the second step or immediately before initiation of the third step.

Further preferably, according to the present invention, in the process for producing lithium iron phosphate particles having an olivine type structure after completion of the third step, the resulting reaction product comprising lithium, iron and phosphorus as main components is subjected to re-pulverization and then re-precision mixing, and the resulting mixture obtained by the re-precision mixing is re-mixed with the at least one material selected from the group consisting of the conductive carbon, the organic substance having a capability of reducing Fe³⁺ to Fe²⁺ and the organic binder, and then re-sintered in an inert gas or reducing gas atmosphere having an oxygen concentration of not more than 0.1% at a temperature of 250 to 750°C.

It is also preferred, according to the present invention, that in the process for producing lithium iron phosphate particles having an olivine type structure in the first step of mixing the respective raw materials, a slurry of the raw materials is controlled such that a concentration of solid components of the raw materials therein is not less than 30% by weight; ascorbic acid or sucrose is added to the slurry in an amount of 1 to 25% by weight based on LiFePO₄ as finally produced; and the resulting slurry is mixed at a temperature of not higher than 50°C to adjust a pH value of the slurry ranging from 4 to 8.

In addition, according to the present invention, there are provided lithium iron phosphate particles having an olivine type structure, comprising lithium and phosphorus in such an amount that a molar ratio of each of the lithium and phosphorus to iron is 0.95 to 1.05; and having a content of Fe³⁺ of less than 5 mol% based on an amount of Fe, a BET specific surface area of 6 to 30 m²/g, a residual carbon content of 0.5 to 8% by weight, a residual sulfur content of not more than 0.08% by weight, a content of Li₃PO₄ as a crystal phase (impurity phase) other than the olivine type structure, of not more than 5% by weight, a crystallite size of 25 to 300 nm, agglomerates diameter of 0.3 to 20 µm, a density of 2.0 to 2.8 g/cc when formed into a compression-molded product, and a powder electric resistance of 1 to 1.0 x 10⁵ Ω•cm, said particles being obtainable by a process of the invention.

Further, according to the present invention, there is provided a positive electrode material sheet for secondary batteries having a density of not less than 1.8 g/cc, which comprises a composite material comprising the lithium iron phosphate particles of the invention, 0.1 to 10% by weight of carbon as a conductive assistant, and 1 to 10% by weight of a binder.

Furthermore, according to the present invention, there is provided a secondary battery produced by using the positive electrode material sheet for secondary batteries of the invention.

Also provided is the use of the lithium iron phosphate particles of the invention as a positive electrode active material for a non-aqueous solvent-based secondary battery.

### EFFECT OF THE INVENTION

In the process for producing lithium iron phosphate particles having an olivine type structure according to the present invention, it is possible to produce the lithium iron phosphate particles at low costs with a less environmental burden. In the particles obtained by the above production process, the additive elements can be present in the form of a uniform solid solution therein, or surface modification. That's why electrons and Li ions can be readily moved therein owing to the defective structure. And, the particles have a high packing property because they are well-controlled to suppress formation of aggregated particles thereof. In addition, a secondary battery produced by using the lithium iron phosphate particles as a positive electrode material can exhibit a high capacity even in current load characteristics and can be sufficiently used in charge and discharge repeating cycles.

In addition, more specifically, the olivine type LiFePO₄ composite oxide particles according to the present invention have a density of not less than 2.0 g/cc when formed into a compression-molded product under a pressure of not less than 0.5 t/cm², and can be therefore enhanced in a packing property as well as an energy density per a unit volume.

Further, the olivine LiFePO₄ particles according to the present invention comprise lithium and phosphorus in such an amount that a molar ratio of each of the lithium and phosphorus to iron is 0.95 to 1.05, and have a content of Fe³⁺ of less than 5 mol% based on an amount of Fe, a BET specific surface area of 6 to 30 m²/g, a residual carbon content of 0.5 to 8% by weight, a residual sulfur content of not more than 0.08% by weight, a content of Li₃PO₄ as an crystal phase (impurity phase) other than the olivine type structure, of not more than 5% by weight, a crystallite size of 25 to 300 nm, agglomerates diameter of 0.3 to 20 µm, a density of 2.0 to 2.8 g/cc when formed into a compression-molded product, and a powder electric resistance of 1 to 1.0 x 10⁵ Ω•cm, and are capable of enhancing capacities at high rate and charge and discharge cycle characteristics when subjecting the secondary battery comprising the particles to the cycles.

Therefore, the olivine type LiFePO₄ particles according to the present invention are suitable as a positive electrode active material for a non-aqueous solvent-based secondary battery.

### BRIEF DESCRIPTION OF THE DRAWINGS

FIG. 1 is a flowchart showing the process for producing lithium iron phosphate particles having an olivine type structure according to the present invention.
FIG. 2 is a secondary electron image by a scanning electron microscope of Fe₃O₄ as an iron raw material shown in Table 1.
FIG. 3 is a back-scattered electron image by a scanning electron microscope of a precursor comprising lithium, phosphorus and iron elements which was obtained after the second step in Example 1.
FIG. 4 is a secondary electron image by a scanning electron microscope of lithium iron phosphate particles having an olivine type structure which were obtained in Example 1.
FIG. 5 is a high-resolution TEM bright field micrographic image of lithium iron phosphate particles having an olivine type structure which were obtained in Example 5.
FIG. 6 is a selected area electron diffraction pattern at a center of lithium iron phosphate particles having an olivine type structure which were obtained in Example 5.
FIG. 7 is an energy dispersive X-Ray Spectroscopy of the surface of lithium iron phosphate particles having an olivine type structure which were obtained in Example 5.
FIG. 8 shows Rietveld refined X-ray patterns for lithium iron phosphate particles having an olivine type structure which were obtained in Example 7.
FIG. 9 shows a discharge characteristic of the coin type cell comprising the sheet No. 2 shown in Table 5

### PREFERRED EMBODIMENT FOR CARRYING OUT THE INVENTION

The constructions of the present invention are described in detail below.

First, the process for producing the positive electrode active material according to the present invention is described.

The lithium iron phosphate particles having an olivine type structure according to the present invention can be produced by subjecting an iron raw material in which additive elements such as Na, Mg, Al, Si, Cr, Mn and Ni (hereinafter referred to as "different kinds of metal elements") are incorporated in the form of a solid solution or absorbed, together with a lithium raw material and a phosphorus raw material, to uniform precision mixing and then adequate heat treatment.

In the present invention, the iron raw material in which the different kinds of metal elements (such as Na, Mg, Al, Si, Cr, Mn and Ni) are incorporated in the form of a solid solution, may be produced as follows. That is, 0.1 to 1.8 mol/L of ferrous sulfate or ferric sulfate is mixed with a sulfate, a nitrate, a chloride or an organic material comprising the different kinds of metal elements to form a mixed solution thereof in which the respective elements are present in predetermined molar ratios. The thus obtained mixed solution is filled in a reaction vessel, and a 0.1 to 18.5 mol/L alkali aqueous solution is slowly added thereto while stirring to thereby conduct the reaction between the respective components while maintaining an inside of the reaction vessel in a temperature range of from room temperature to 105°C at a pH of not less than 8, followed by subjecting the resulting reaction mixture to air oxidation reaction, if required, thereby obtaining the iron raw material.

In addition, in certain cases, a sulfate, a nitrate, a chloride or an organic material comprising the different kinds of metal elements may be absorbed in the thus produced iron oxide or iron oxide hydroxide such that the respective elements are present at predetermined molar ratios.

As the organic material, there may be used carboxylic acid salts, alcohols and saccharides which are likely to be incorporated or absorbed in the produced iron oxide or iron oxide hydroxide.

On the other hand, as the alkali source, there may be used NaOH, Na₂CO₃, NH₄OH, ethanol, amines, etc. The iron raw material may be subjected to washing by filtration or washing by decantation in order to remove sulfate ions as impurities and well control the compositional ratios of the additives to Fe. Examples of the apparatus used for these washing procedures include a press filter, a filter thickener, etc.

In order to control a particle diameter of the obtained iron oxide or iron oxide hydroxide, the concentration, temperature, and pH value of the solution, the chemical reaction time, and the degree of air oxidation, etc., may be appropriately adjusted. The materials comprising at least one compound selected from the group consisting of Fe₃O₄, α-FeOOH, γ-FeOOH and δ-FeOOH which has an average primary particle diameter of 5 to 300 nm is used as iron sources.

Examples of the lithium raw material and the phosphorus raw material used in the present invention include LiOH, LiOH•nH₂O (mainly n = 1), Li₂CO₃, H₃PO₄, (NH₄)H₂PO₄, (NH₄)₂HPO₄, LiH₂PO₄ and Li₃PO₄. (NH₄)H₂PO₄ and (NH₄)₂HPO₄ may be produced by a co-precipitation method using H₃PO₄ and NH₄OH; LiH₂PO₄ may be produced by a method of subjecting a mixed solution comprising a H₃PO₄ solution and a LiOH or LiOH•nH₂O aqueous solution to evaporation to dryness; and Li₃PO₄ may be produced by a co-precipitation method using H₃PO₄ and a LiOH or LiOH•nH₂O.

The average particle diameter of each of the lithium raw material and the phosphorus raw material is preferably not more than 10 µm. The lithium raw material and the phosphorus raw material are mixed with the above iron raw material at a predetermined mixing ratio so as to obtain the aimed lithium iron phosphate particles having an olivine type structure (first step).

Examples of the apparatus used for the above mixing procedure include a Henschel mixer, an attritor and a highspeed mixer.

The mixture obtained in the first step is controlled such that the agglomerates diameter therein is 0.3 to 5.0 µm (second step). Preferably, when observing the mixture by an electron microscope, the Fe element is present at a proportion of not less than 19/20 in a visual field of 2 µm x 2 µm except for voids.

The controlling method used in the second step includes precision mixing of the lithium raw material and the phosphorus raw material with the iron raw material which is mainly accompanied with pulverization of the lithium raw material and the phosphorus raw material. In the precision mixing, there may be used a ball mill, a vibration mill or a media-stirring type mill. In this case, a preferred precursor tends to be readily produced by a wet process as compared to a dry process. However, in the wet method, it is required to carefully select the main raw materials and additives so as not to dissolve them in a solvent.

When the agglomerates diameter in the mixture is out of the range of 0.3 to 5.0 µm, the LiFePO₄ obtained after the third step tends to undergo grain growth, thereby failing to obtain good cell characteristics.

In the case where the precision mixing is not carried out such that when observing the mixture using an electron microscope, the Fe element is present at a proportion of not less than 19/20 in a visual field of 2 µm x 2 µm except for voids, the LiFePO₄ obtained after the third step tends to undergo grain growth, thereby failing to obtain good cell characteristics. Also, when the Fe element is present at a proportion of not less than 19/20 by the observation, it has been recognized from experiential knowledge that the preferred LiFePO₄ is obtainable. On the other hand, the agglomerates diameter is suitably controlled by compacting the aggregated particles together with the organic material added in the first step by an adequate dry method.

In order to determine whether or not the Fe element is present at a proportion of not less than 19/20 in a visual field of 2 µm x 2 µm except for voids, the structure of the Fe raw material is confirmed, for example, by observing a secondary electron image or a back-scattered electron image obtained using a scanning electron microscope. The configuration of the Fe raw material undergoes substantially no change between before and after the second step, and the presence of the Fe element was confirmed by the shape of the iron raw material in the second electron image and a high brightness portion in the back-scattered electron image.

The agglomerates diameter of the olivine type LiFePO₄ according to the present invention undergoes substantially no change between before and after the sintering step, i.e., the aggregated particles of the lithium iron phosphate particles having an olivine type structure which are obtained through and after the second and third steps are substantially free from change in the particle diameter thereof. Therefore, it is required to control the agglomerates diameter in the second step.

The precursor obtained in the second step is subjected to sintering at a temperature ranging from 250 to 750°C in an inert gas or reducing gas atmosphere having an oxygen concentration of not more than 0.1% (third step).

Examples of the apparatus used in the sintering step include a gas flowing box-type muffle furnace, a gas flowing rotary furnace, a fluidized heat-treating furnace, etc. Examples of the inert gas used in the sintering step include N₂, Ar, H₂O, CO₂ and a mixed gas thereof. Examples of the reducing gas used in the sintering step include H₂, CO and a mixed gas of these gases with the above inert gas.

Fe³⁺ in the Fe raw material is converted into Fe²⁺ by the reaction of the additive element C or the reducing gas to thereby produce LiFePO₄. For this reason, it is required that the sintering step is carried out in an atmosphere having an oxygen concentration of not more than 0.1%. From the experiential knowledge, the LiFePO₄ is sufficiently produced at a temperature of not lower than 350°C. However, in order to simplify the solid state reaction and form a graphite phase of the additive element C having a higher electronic conduction, the heat treatment of the precursor is preferably carried out at a temperature ranging from 400 to 700°C for several hours.

In previous reports and our experiential knowledge, there is such a tendency that the Fe³⁺-containing raw material is readily subjected to grain growth of the products during the sintering step as compared to the Fe²⁺-containing raw material. On the other hand, it is better to use fine particles as a Fe raw material because of their high solid state reactivity. In addition, in view of easiness of precision mixing, the average primary particle diameter of the Fe raw material is preferably 30 to 250 nm.

The chemical compositional ratios of the Li, Fe and P raw materials and the chemical compositional ratios of the respective additive elements to Fe except for the additive element C undergo substantially no change between before and after the heat treatment, and are substantially identical to those obtained in the first step. The content of the additive element C may be sometimes reduced to less than 50% depending upon the degree of the heat treatment for reducing Fe³⁺ into Fe²⁺. Therefore, it is required to previously measure the amount of residual C under the respective sintering conditions and control the amount of residual C in the first step.

In the first step in which the respective raw materials are mixed with each other, the raw materials are preferably mixed in an aqueous solvent. In this case, the concentration of the raw materials in the resulting slurry is preferably adjusted to not less than 30% by weight.

Also, in the first step, ascorbic acid or sucrose is added to the slurry in an amount of 1 to 25% by weight based on the weight of the LiFePO₄ produced. When ascorbic acid or sucrose is added to the slurry, the chemical reaction of Li, Fe and P can be promoted, so that segregation of the composition when dried as well as formation of different phases after sintering tend to be hardly caused. When the amount of ascorbic acid or sucrose added is less than 1% by weight, the effect of addition of ascorbic acid or sucrose tends to be hardly produced. When the amount of ascorbic acid or sucrose added is more than 25% by weight, the different phases of products tends to be hardly suppressed in an efficient manner. The amount of ascorbic acid or sucrose added is more preferably is 2 to 10% by weight.

Also, the chemical reaction temperature used in the first step is preferably not higher than 50°C. When the reaction temperature used in the mixing step is higher than 50°C, it may be difficult to obtain an olivine single phase. The reaction temperature used in the first step is more preferably in the range of from room temperature to 45°C and still more preferably 25 to 43°C.

In addition, the pH of the slurry in the above first step is preferably controlled to 4 to 8. When the pH of the slurry is less than 4, P ions tend to be present in the solution, so that undesirable segregation of the composition tends to be caused during drying, and formation of different phases tends to be caused after sintering. On the other hand, it may be principally difficult to adjust the pH of the slurry to more than 8. The pH of the slurry in the first step is more preferably 4.5 to 6.5.

In the present invention, in the case where the inert gas having an oxygen concentration of no more than 0.1% is used in the heat treatment of the third step, it is possible to use the iron raw material comprising an organic material having a high reducing capability in order to positively promote organic reduction of Fe³⁺ to Fe²⁺. The amount of the organic material in the iron raw material is controlled such that the amount of residual carbon in the lithium iron phosphate particles produced is 0.5 to 8.0% by weight based on the weight of the lithium iron phosphate particles produced. As the organic material having a high reducing capability, there are preferably used carboxylic acid salts, alcohols and sugars which are readily incorporated or absorbed in the iron oxide or iron oxide hydroxide. However, the organic material having a high reducing capability must be carefully handled so as not to reduce the iron raw material by itself but so as to reduce the iron raw material upon sintering.

In order to conduct low-temperature sintering in the third step, carbon black having a high electric conductivity may be added as the additive element C during the second step or before the third step. Examples of the carbon black usable for the above purpose include acetylene black (produced by Denki Kagaku Kogyo K.K.) and Ketjen black (produced by Lion corp.). When adding the carbon black, the compression-molded product obtained from the resulting olivine type LiFePO₄ can satisfy an electric resistivity of 1 to 10⁵ Ω•cm even upon the low-temperature sintering conducted at a temperature as low as 400 to 500°C, so that a secondary battery obtained using the compression-molded product can exhibit a high performance, i.e., high secondary battery characteristics.

In the present invention, in the case where the inert gas having an oxygen concentration of no more than 0.1% is used in the heat treatment of the third step, it is possible to add the above organic material having a high reducing capability during the second step or before the third step in order to positively promote organic reduction of Fe³⁺ to Fe²⁺. The amount of the organic material added is controlled such that the amount of residual carbon in the lithium iron phosphate particles produced is 0.5 to 8% by weight based on the weight of the lithium iron phosphate particles produced. The organic material used is not particularly limited by easiness of incorporation or absorption in the iron raw material during the solution reaction thereof, but it is required that the organic material is present in a finely and uniformly dispersed state in the precursor comprising Li, Fe and P. As the organic material, there may be used, for example, a resin powder of polyethylene, etc.

As described above, the particle diameter of the aggregated particles of the LiFePO₄ composite oxide particles having an olivine type structure which are obtained according to the present invention undergoes substantially no change between before and after the third step, i.e., between before and after the sintering step. For this reason, an organic binder may be added during the second step or before the third step to control the particle diameter of the aggregated particles of the precursor to 0.3 to 30 µm, so that LiFePO₄ whose aggregated particles have a particle diameter of 0.3 to 30 µm can be produced after the sintering step.

Examples of a controlling agent for controlling the particle diameter of the aggregated particles of the precursor to 0.3 to 30 µm which may be used in the present invention include organic binders such as polyvinyl alcohol and sucrose.

Further, in the present invention, at least one material selected from the group consisting of the above conductive carbon, the above reducing agent acting during the sintering step and the above controlling agent for controlling the particle diameter of the aggregated particles of the precursor may be added during the second step or before the third step. The amount of these materials added may be controlled such that the amount of residual carbon in the lithium iron phosphate particles is 0.5 to 8% by weight based on the weight of the lithium iron phosphate particles produced (step A of Invention 5).

In the present invention, upon conducting the heat treatment, generation of water vapor and generation of oxidative gases owing to reduction of Fe³⁺ in the precursor tend to cause any localization of gas concentration distribution which may have adverse influences on a quality of the aimed product. For this reason, the resulting particles may be subjected to so-called calcination and then again to mixing with the above carbon-containing additive and pulverization, and then again to heat treatment (substantial sintering step). In this case, it is preferred that the calcination temperature be a low temperature ranging from about 250 to about 500°C, whereas the substantial sintering temperature be a high temperature ranging from 400 to 750°C. The order of the calcination and the substantial sintering to be conducted is not particularly limited.

Also, in the present invention, the carbon-containing additive added before the second heat treatment may also be the conductive carbon, the organic reducing agent, or the binder for controlling the agglomerates diameter of the precursor. In the present invention, at least one of these additives may be mixed with the particles to be treated (step A of Invention 6).

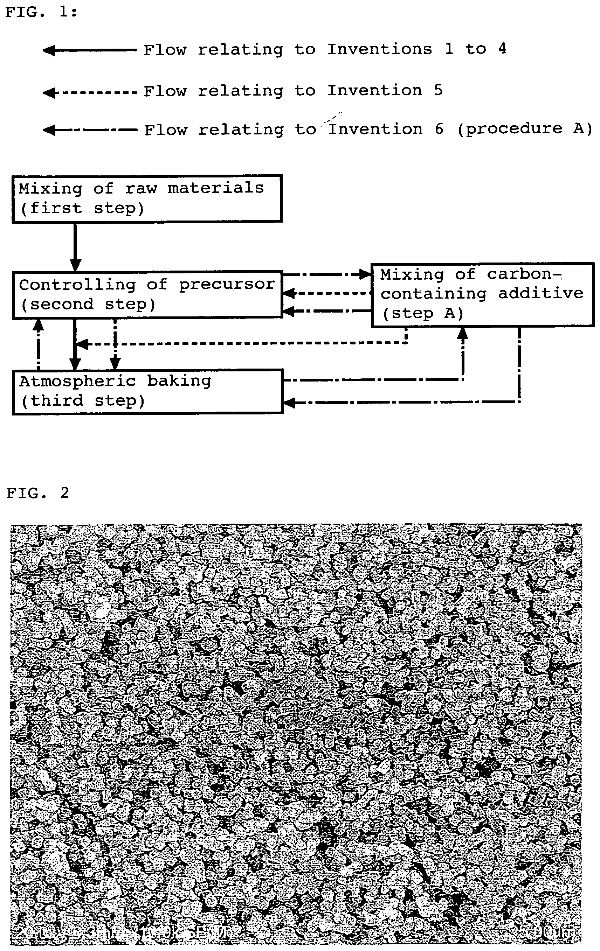

The flowchart of the process for producing the lithium iron phosphate particles having an olivine type structure according to the present invention is shown in FIG. 1.

Next, the olivine type LiFePO₄ according to the present invention which can be suitably used for non-aqueous electrolyte secondary batteries are described.

The olivine type LiFePO₄ according to the present invention have a composition represented by the formula: LiₓFeP_{y}O₄ (wherein x and y each satisfy 0.95 < x, y < 1.05). When x or y is out of the above-specified range, the different phases tend to be formed in the particles, and in some cases, grain growth tends to be promoted, so that it may be difficult to obtain LiFePO₄ capable of providing a cell having a high performance, i.e., exhibiting high cell characteristics. More preferably, x and y each satisfies the condition of 0.98 ≤ x, y ≤ 1.02. The content of each of the different kinds of metal elements (such as Na, Mg, Al, Si, Cr, Mn and Ni) is preferably 0.1 to 2 mol% based on Fe.

The ratio of Fe³⁺ to Fe (Fe³⁺/Fe) in the olivine type LiFePO₄ composite oxide particles is less than 5 mol%. It is known that the LiFePO₄ produced after sintering is oxidized by exposure to air to form an amorphous phase of Fe³⁺. The thus formed Fe³⁺ compound does not contribute to charge and discharge characteristics of the resulting secondary battery and generates dendrite in a negative electrode of the cell, thereby causing a large possibility that a short circuit inside of the electrode tends to be promoted. Therefore, the formation of the Fe³⁺ amorphous phase in the particles should be avoided as carefully as possible.

The olivine type LiFePO₄ according to the present invention have a BET specific surface area of 6 to 30 m²/g. When the BET specific surface area of the LiFePO₄ particles is less than 6 m²/g, the movement of Li ions in the LiFePO₄ tends to be very slow, so that it may be difficult to retrieve a suitable amount of electric current from the resulting cell. When the BET specific surface area of the LiFePO₄ particles is more than 30 m²/g, the packing density of a positive electrode of the cell tends to be lowered or the reactivity with an electrolyte solution tends to be increased. The BET specific surface area of the LiFePO₄ particles is preferably 8 to 28 m²/g and more preferably 9 to 25 m²/g.

The olivine type LiFePO₄ composite oxide particles according to the present invention comprise residual carbon in an amount of 0.5 to 8.0% by weight. When the residual carbon content is less than 0.5% by weight, it may be difficult to suppress grain growth in the particles upon the heat treatment, and the resulting particles tend to have a high electric resistance so that the secondary battery obtained using the particles tends to be deteriorated in charge and discharge characteristics. On the other hand, when the residual carbon content is more than 8.0% by weight, the packing density of the positive electrode tends to be lowered, so that the resulting secondary battery tends to have a small energy density per unit volume thereof. The residual carbon content in the olivine type LiFePO₄ composite oxide particles is preferably 0.6 to 6.0% by weight.

The LiFePO₄ composite oxide particles having an olivine type structure according to the present invention comprise residual sulfur as an impurity in an amount of not more than 0.08% by weight to obtain a non-aqueous electrolyte secondary battery having a good storage property. When the residual sulfur content is more than 0.08% by weight, impurities such as lithium sulfate tend to be formed in the particles and undergo decomposition reaction during charge and discharge cycles so that the reaction thereof with an electrolyte solution when stored under high temperature condition tends to be promoted, resulting in significant rise of electric resistance in the resulting cell after storage. The residual sulfur content in the LiFePO₄ composite oxide particles is preferably not more than 0.05% by weight.

The olivine type LiFePO₄ according to the present invention may also comprise, in addition to the olivine type structure, a crystal phase of Li₃PO₄ as long as the amount of the other crystal phase detected is not more than 5% by weight. When the Li₃PO₄ is detected, the LiFePO₄ particles obtained by the solid state reaction tend to be fine particles in some cases, so that the discharge capacity of the resulting cell tends to be increased. On the other hand, since the Li₃PO₄ itself does not contribute to charge and discharge characteristics of the resulting cell, the content of the Li₃PO₄ in the LiFePO₄ particles is desirably not more than 5% by weight.

The olivine type LiFePO₄ according to the present invention have a crystallite size of 25 to 300 nm. It may be extremely difficult to mass-produce the LiFePO₄ particles having a crystallite size of less than 25 nm while satisfying the other powder properties by using the above production process. On the other hand, in the LiFePO₄ particles having a crystallite size of more than 300 nm, the movement of Li tends to require a prolonged time, so that the resulting secondary battery tends to be deteriorated in current load characteristics. The crystallite size of the LiFePO₄ particles is preferably 30 to 200 nm and more preferably 40 to 150 nm.

The olivine type LiFePO₄ according to the present invention have agglomerates diameter of 0.3 to 30 µm. When the agglomerates diameter of the LiFePO₄ particles is less than 0.3 µm, the packing density of the positive electrode in the resulting cell tends to be lowered, or the reactivity thereof with an electrolyte solution tends to be increased. On the other hand, it may be extremely difficult to mass-produce the LiFePO₄ particles having agglomerates diameter of more than 30 µm while satisfying the other powder properties by using the above production process. The agglomerates diameter of the LiFePO₄ particles is preferably 0.5 to 15 µm.

The density of a compression-molded product of the olivine type LiFePO₄ according to the present invention is preferably not less than 2.0 g/cc. The true density of LiCoO₂ used lamellar compound is 5.1 g/cc, whereas the true density of LiFePO₄ is as low as 3.6 g/cc. Therefore, the density of a compression-molded product of the LiFePO₄ particles is preferably not less than 2.0 g/cc which is not less than 50% of the true density thereof. The closer to the true density, the more excellent the packing property of the LiFePO₄ particles becomes. On the other hand, it may be extremely difficult to mass-produce the LiFePO₄ particles which allow their compression-molded product to have a density of more than 2.8 g/cc while satisfying the other powder properties by using the above production process. It is considered that the olivine type LiFePO₄ according to the present invention have a small residual carbon content, primary particles thereof are aggregated together, and the density of a compression-molded product of the particles is high.

The olivine type LiFePO₄ according to the present invention have a powder electric resistivity of 1 to 10⁵ Ω•cm and preferably 10 to 5 x 10⁴ Ω•cm.

Next, the positive electrode sheet and the non-aqueous electrolyte secondary battery obtained by using the LiFePO₄ having an olivine type structure according to the present invention as a positive electrode active material are described.

When producing the positive electrode sheet using the positive electrode active material according to the present invention, a conducting agent and a binder are added to the positive electrode active material by an ordinary method. Examples of the preferred conducting agent include acetylene black, carbon black and graphite. Examples of the preferred binder include polytetrafluoroethylene and polyvinylidene fluoride. By using a solvent, for example, N-methyl pyrrolidone, a slurry comprising the positive electrode active material having a reduced particle diameter of 45 to 105 µm by passing through a sieve as well as the additives is kneaded until it becomes a honey-like liquid. The resulting kneaded slurry is applied onto a current collector using a doctor blade having a grooved gap of 25 to 500 µm. The coating speed of the slurry is about 60 cm/sec, and an Al foil usually having a thickness of about 20 µm is used as the current collector. In order to remove the solvent and soften the binder, the drying of the slurry applied is carried out at a temperature of 80 to 180°C in a non-oxidative atmosphere for Fe²⁺. The sheet is subjected to calendar roll treatment while applying a pressure of 1 to 3 t/cm² thereto. In the above sheet-forming step, the oxidation reaction of Fe²⁺ to Fe³⁺ tends to be caused even at room temperature. Therefore, the sheet-forming step is desirably carried out in the non-oxidative atmosphere.

The density of the positive electrode comprising the positive electrode active material, the carbon and the binder which is formed on the current collector of the resulting positive electrode sheet is not less than 1.8 g/cc. In the positive electrode sheet of the present invention, since the density of the compression-molded product of the positive electrode active material is as high as not less than 2.0 g/cc and the electric resistivity of the compression-molded product of the positive electrode active material is as low as 1 to 10⁵ Ω•cm, the amount of the carbon added upon the sheet-forming step can be suppressed. In addition, since the BET specific surface area of the positive electrode active material is as low as 6 to 30 m²/g, the amount of the binder added can also be suppressed. As a result, the obtained positive electrode sheet can exhibit a high density.

Examples of a negative electrode active material which may be used for a negative electrode in the resulting cell include metallic lithium, lithium/aluminum alloy, lithium/tin alloy and graphite. A negative electrode sheet may be produced by the same doctor blade method as used for production of the above positive electrode sheet.

Also, as a solvent for the electrolyte solution, there may be used combination of ethylene carbonate and diethyl carbonate, as well as an organic solvent comprising at least one compound selected from the group consisting of carbonates such as propylene carbonate and dimethyl carbonate, and ethers such as dimethoxyethane.

Further, as the electrolyte, there may be used a solution prepared by dissolving lithium phosphate hexafluoride as well as at least one lithium salt selected from the group consisting of lithium perchlorate and lithium borate tetrafluoride in the above solvent.

In the secondary battery produced by using the positive electrode sheet of the present invention, as measured under C/10 at room temperature, a discharge capacity thereof is not less than 150 mAh/g, and a capacity deterioration rate thereof in 50 cycle repeated charge and discharge characteristics is less than 10%. Further, in the secondary battery, as measured under 1C at room temperature, a discharge capacity thereof is not less than 120 mAh/g, and a capacity deterioration rate thereof in 50 cycle repeated charge and discharge characteristics is less than 5%. In addition, in the secondary battery, as measured under 5C at room temperature, a discharge capacity thereof is not less than 80 mAh/g. The capacity deterioration rate as used herein means the value represented by the formula: (C₅₀ - C₁)/C₁ x 100 wherein C₁ is a discharge capacity obtained at the first charge and discharge cycle; and C₅₀ is a discharge capacity obtained at the 50th charge and discharge cycle. In the present invention, it has been confirmed that the discharge capacities vary from Cₙ to Cₙ₊₁ (n is an integer) in a continuous manner, and therefore a reasonable evaluation can be attained.

The "C/20" means a current value fixed such that an electric current corresponding to 170 mAh/g as a theoretical capacity of LiFePO₄ is flowed over 20 hr, whereas the "5C" means a current value fixed such that an electric current corresponding to 170 mAh/g as a theoretical capacity of LiFePO₄ is flowed over 1/5 hr. The higher coefficient of C means a higher current load characteristic.

The current value upon charging is not particularly limited. In the present invention, it has been confirmed that substantially the same capacity as the theoretical capacity is obtained using a constant current of C/20. In addition, the voltage range upon charging and discharging is not particularly limited. In the present invention, the charging and discharging are carried out in the voltage range between 2.0 to 4.5 V.

### <Function>

The olivine type LiFePO₄ according to the present invention can be produced at low costs with a less environmental burden because the inexpensive and stable Fe³⁺-containing iron raw material is used for production thereof. The reason why the secondary battery of the present invention can fulfill the above cell characteristics is considered a follows. That is, it is suggested by the present inventors that since the particles of the present invention can satisfy the powder characteristics described in Invention 7, in particular, since the modifying additive elements are controlled so as to form a solid solution in the particles, a high capacity can be attained even in current load characteristics, and the resulting cell can be sufficiently used for repeated charge and discharge cycles.

### EXAMPLES

Typical embodiments of the present invention are described in more detail below.

The quantitative determination of the Fe concentration of the iron raw material used in the first step of the present invention was carried out by titration (according to JIS K5109). The identification of a crystal phase was carried out using an X-ray diffraction analyzer "RINT-2500" (manufactured by Rigaku Corp.) under the conditions of Cu-Kα, 40 kV and 300 mA to thereby confirm that no crystallized additive elements in the Fe raw materials were present.

The quantitative determination of the element C added to the iron raw material was carried out using "EMIA-820" (manufactured by Horiba Ltd.) by burning the iron raw material in a combustion furnace under an oxygen gas flow.

The contents of Li, Fe and P main elements as well as the contents of the additive elements except for C including Na, Mg, Al, Si, Ca, Ti, Cr, Mn, Co, Ni and Zn were measured using an inductively coupled plasma emission spectrometric analyzer "ICAP-6500" (manufactured by Thermo Fisher Scientific K.K.).

The calculation of an average primary particle diameter of the iron raw material was performed as follows. That is, using a scanning electron microscope (SEM; "S-4800") manufactured by Hitachi Ltd., minor axis diameters and major axis diameters of about 200 particles recognized from the obtained micrographic image were actually measured to calculate the average primary particle diameter. As to α-FeOOH only, an aspect ratio thereof was calculated instead of the average primary particle diameter because it had a very large difference in ratio between major axis and minor axis diameters.

The properties of the iron raw material used in the present invention are shown in Table 1. The aspect ratio (major axis diameter/minor axis diameter) of α-FeOOH as the iron raw material No. 4 was 5, and the aspect ratio (major axis diameter/minor axis diameter) of α-FeOOH as the iron raw material No. 5 was 2.5.

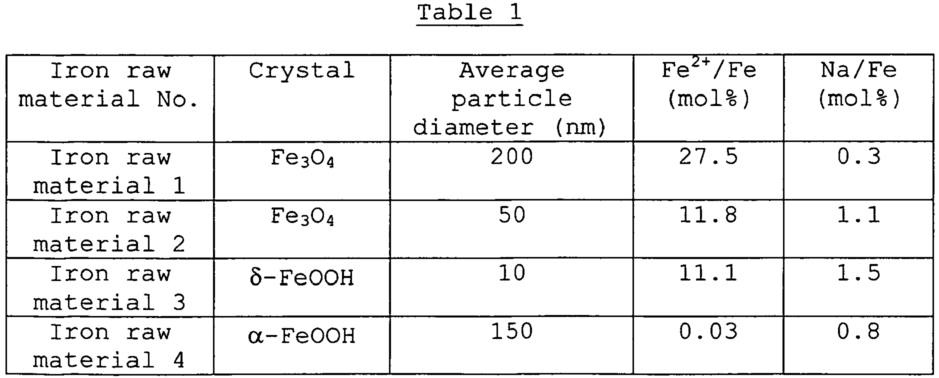

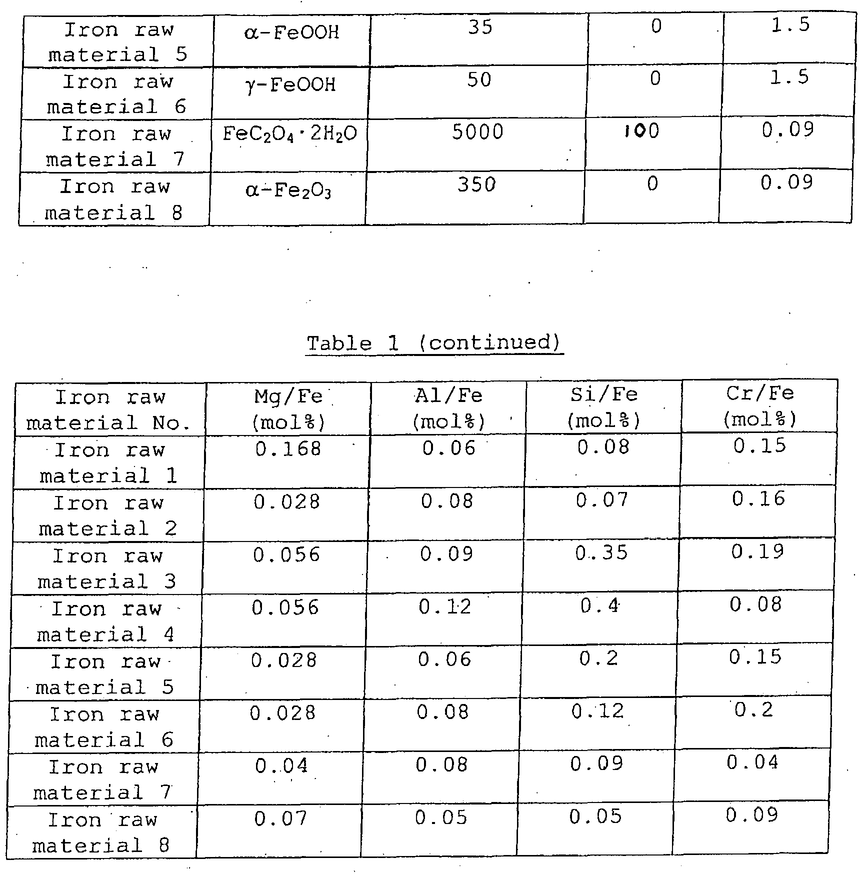

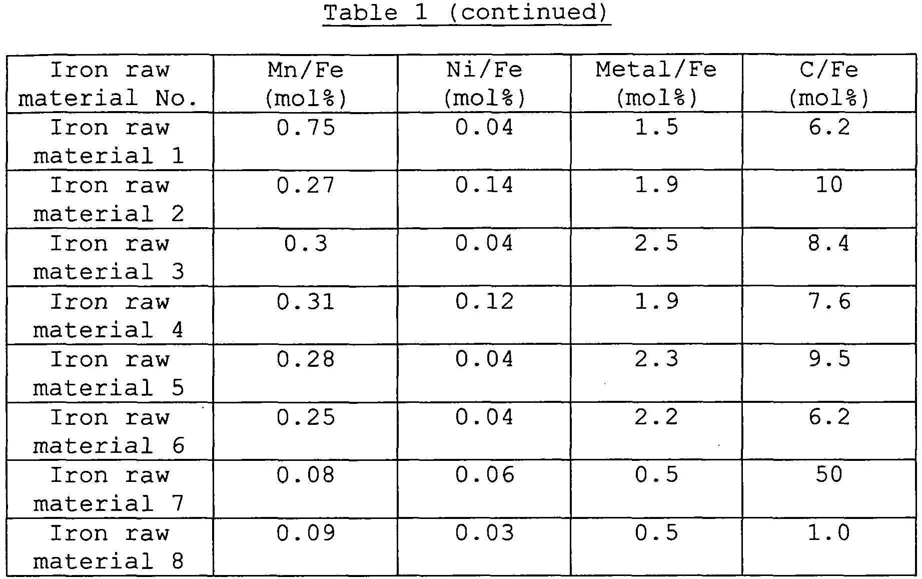

The Li and P concentrations in the lithium and phosphorus-containing main raw materials were measured by neutralization titration using a pH meter and hydrochloric acid or NaOH as a reagent.

The concentrations of impurity elements in the lithium and phosphorus-containing main raw materials were measured using the above inductively coupled plasma emission spectrometric analyzer. As a result, it was confirmed that the concentrations of impurity elements were those having adverse influences on the effects of the present invention or those correctable by controlling the amounts added.

The determination whether or not the Fe element was present at a proportion of not less than 19/20 in a visual field of 2 µm x 2 µm except for voids in the second step, was carried out using the above scanning electron microscope (SEM).

The agglomerates diameter of the precursor or the lithium iron phosphate particles having an olivine type structure was measured using a dry-type laser diffraction scattering particle size distribution meter "HELOS" (manufactured by Japan Laser Corp.), and quantitatively determined by median diameter D₅₀ thereof.

The lithium iron phosphate particles having an olivine type structure obtained according to the present invention were dissolved in an acid at 200°C using an autoclave for dissolution of the sample. The contents of lithium and phosphorus based on iron were measured using the above inductively coupled plasma emission spectrometric analyzer.

The surface modification of the additive elements and uniform solid solution thereof were distinguished from each other by Rietveld analysis of X-ray diffraction pattern using the above apparatus and local elemental analysis using a high-resolution TEM "JEM-2010F" and its accessory "EDS" manufactured by JOEL Ltd. The X-ray pattern was measured at the intervals of 0.02° at a rate of 2.5°/min in the range 2θ of 15 to 120° such that the number of maximum peak intensity values counted was in the range of 5000 to 8000. The Rietveld analysis was conducted using a program "RIETAN2000". In the analysis, it was assumed that crystallites had no anisotropic spread, and TCH quasi void function was used as a profile function. Using a method such as Finger method for non-symmetrizing these functions, the analysis was carried out such that the reliability factor S value was less than 1.5.

The program was applied to identification of impurity crystal phases other than the olivine type structure, quantitative determination of the impurity crystal phase of Li₃PO₄ other than the olivine type structure, and quantitative determination of a crystallite size of the LiFePO₄ particles having a particle size of not less than 80 nm. In the quantitative determination of a crystallite size of the LiFePO₄ particles having a particle size of less than 80 nm, the crystallite size was calculated from a half value width of the X-ray pattern of the plane (101). The spectral analysis by EDS was terminated when the maximum peak intensity exceeded 60.

### <Reference Literature>

F. Izumi and T. Ikeda, "Mater. Sci. Forum., 2000", Vol. 198, pp. 321-324

The amount of Fe³⁺ based on an amount of Fe was quantitatively determined by the calculation from the amount of Fe and the result of titration of Fe²⁺ (according to JIS K1462) as described above.

The specific surface area was obtained by subjecting a sample to drying and deaeration at 120°C for 45 min under a nitrogen gas atmosphere and then measuring the specific surface area of the dried and deaerated sample by a BET one-point continuous method using "MONOSORB" manufactured by Uasa Ionics Inc.

The residual sulfur content in the particles was quantitatively determined using the above carbon and sulfur measuring apparatus "EMIA-820" (manufactured by Horiba Ltd.), and this method was also applied to measurement of the residual carbon content in the particles.

The density of the compression-molded product was calculated from a weight and a volume of the molded product obtained by compacting the particles under 1.5 t/cm² using a 13 mmφ jig. In addition, the compression-molded product was simultaneously subjected to measurement of a powder electric resistivity thereof by a two-terminal method.

The coin cell of a CR2032 type produced by using the olivine type LiFePO₄ composite oxide particles was evaluated for secondary battery characteristics thereof.

As the carbon for the conductive assistant, there were used acetylene black, ketjen black and graphite "KS-6". As the binder, there was used a solution prepared by dissolving polyvinylidene fluoride having a polymerization degree of 540000 (produced by Aldrich Corp.) in N-methyl pyrrolidone (produced by Kanto Kagaku K.K.).

The coin cell of a CR2032 type (manufactured by Hosen Corp.) was produced by using a positive electrode sheet obtained by blanking a sheet material into 2 cm², a 0.15 mm-thick Li negative electrode obtained by blanking a sheet material into 17 mmφ, a separator (cell guard #2400) obtained by blanking a sheet material into 19 mmφ, and an electrolyte solution (produced by Kishida Chemical Co., Ltd.) prepared by mixing EC and DEC in which 1 mol/L of LiPF₆ was dissolved, with each other at a volume ratio of 3:7.

### Example 1:

The iron raw material No. 1 shown in Table 1 was mixed with LiH₂PO₄ at the charging ratios shown in Table 2, i.e., at the ratios of Li/Fe = 1.01 and P/Fe = 1.01, using an attritor so as to produce 10 g of lithium iron phosphate particles (first step).

Next, the mixed particles obtained in the first step and a given amount of acetylene black were charged into a ZrO₂ ball mill container, and ethanol was added thereto to adjust a concentration of the resulting slurry to 30% by weight. Using 5 mmφ ZrO₂ balls, the slurry was subjected to pulverization and then precision mixing for 24 hr, and then dried at room temperature (removal of the solvent), thereby obtaining a precursor.

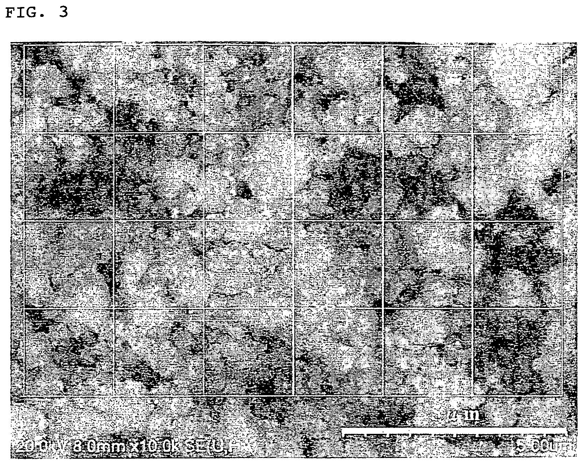

The secondary electron image of the iron raw material used above is shown in FIG. 2, and the back-scattered electron image of the resulting precursor is shown in FIG. 3. The average primary particle diameter of the iron raw material used was 200 nm. Twenty four squares each having a size of 2 µm x 2 µm were drawn and added on the back-scattered image shown in FIG. 2. As a result, it was confirmed that the Fe element was present in a visual field except for voids in the respective squares. The resulting precursor had a particle diameter D₅₀ of aggregated particles of 1.4 µm (step A, second step).

The thus obtained precursor was charged into an alumina crucible and subjected to heat treatment as described in Table 2. More specifically, the heat treatment was carried out under the conditions including a temperature rise rate of 200°C/hr, an ultimate temperature of 500°C and a retention time at the ultimate temperature of 2 hr, using a gas comprising 95% of N₂ and 5% of H₂ at a gas flow rate of 1 L/min (third step).

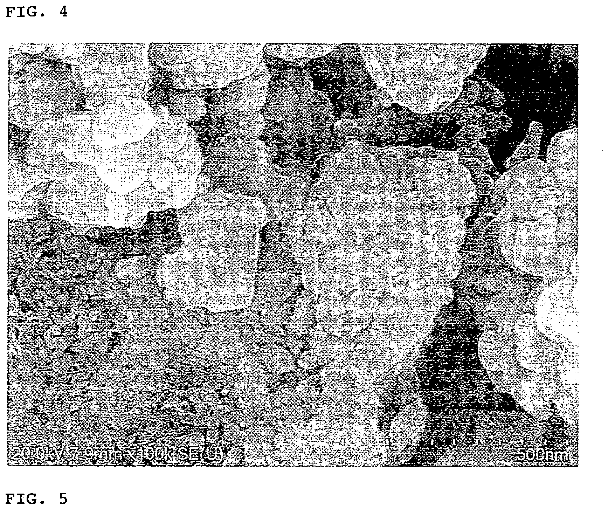

The properties of the obtained particles are shown in Table 3. The thus obtained particles were fine particles having an olivine type structure, were substantially the same in compositional ratios between Li, Fe and P as those of the particles obtained in the first step, and further the compositional ratios between all of the additive elements except for the additive element C, and Fe were consistent with those of the first step within a measuring error range of 3%. The SEM microphotograph of the thus obtained lithium iron phosphate particles having an olivine type structure is shown in FIG. 4 (secondary electron image).

The experimental conditions used in the following Examples and Comparative Examples are shown in Table 2, and the properties of the obtained particles are shown in Table 3.

### Examples 2, 3 and 8:

The respective experiments were carried out under the conditions shown in Table 2. The conditions not shown in Table 2 were the same as those used in Example 1. However, a given amount of the carbon-containing additive was compounded after the second step using a dry-type ball mill. The properties of the obtained lithium iron phosphate particles having an olivine type structure are shown in Table 3. As a result, similarly to Example 1, the obtained particles were fine particles having an olivine type structure, and the compositional ratios between Li, Fe and P as well as the compositional ratios between all of the additive elements except for the additive element C, and Fe were consistent with those of the first step within a measuring error range of 3%.

### Examples 4, 5 and 7:

The main raw materials were mixed with each other at a given mixing ratio by a wet method (aqueous solvent) using a ball mill so as to produce 150 g of lithium iron phosphate particles, and the resulting mixture was dried at 70°C for 12 hr. In the above step, as the lithium and phosphorus-containing main raw materials, Li₃PO₄ and H₃PO₄ were used (first step).

The dried product obtained above and a given amount of the carbon-containing additive were pulverized for 24 hr using a 5 mmφ ZrO₂ dry-type ball mill (step A, second step), and then subjected to calcination at 400°C for 2 hr in a nitrogen atmosphere (third step). After conducting the pulverization and mixing in the dry-type ball mill, the resulting particles were subjected again to heat treatment at 650°C for 2 hr in a nitrogen atmosphere (Procedure A).

The properties of the thus obtained lithium iron phosphate particles having an olivine type structure are shown in Table 3. As a result, similarly to Example 1, the obtained particles were fine particles having an olivine type structure, and the compositional ratios between Li, Fe and P as well as the compositional ratios between all of the additive elements except for the additive element C, and Fe were consistent with those of the first step within a measuring error range of 3%.

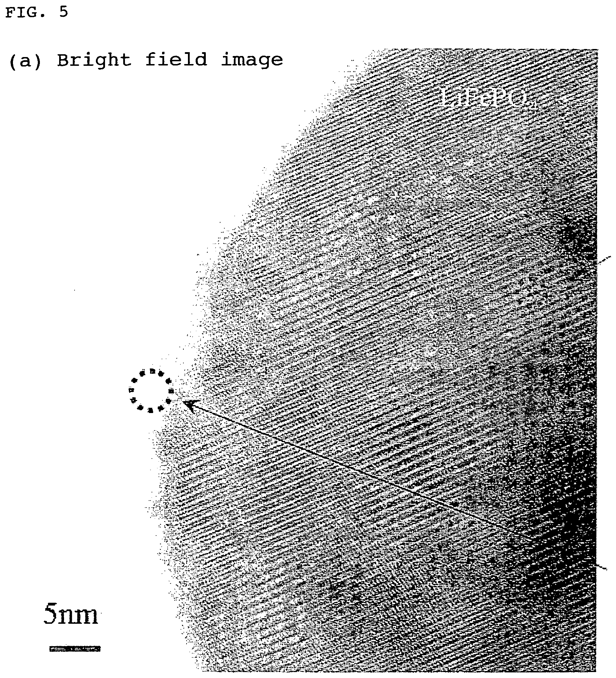

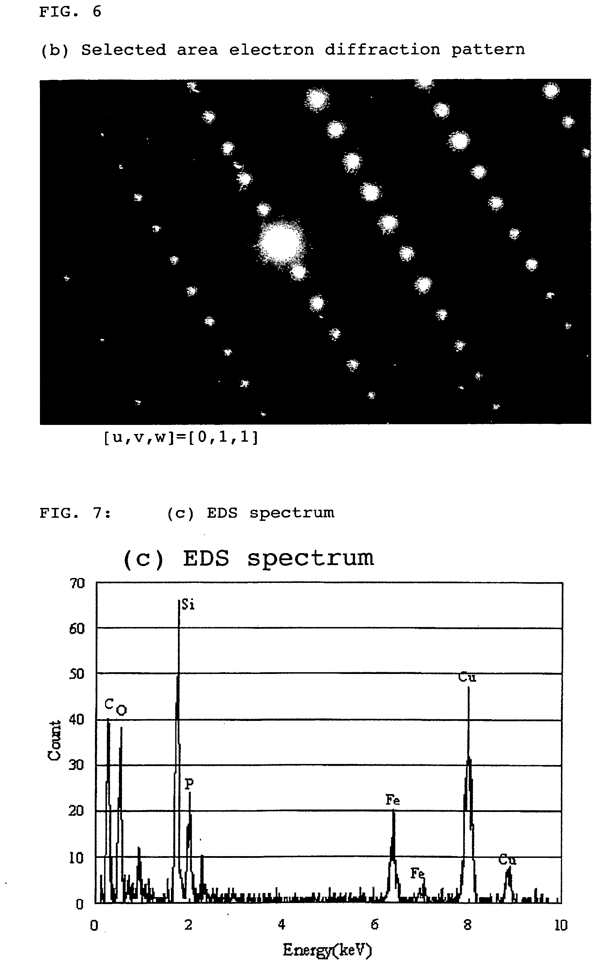

In FIGS. 5 to 7, there are shown the high-resolution TEM bright field micrographic image of the particles obtained in Examples 5 (FIG. 5), the selected area electron diffraction pattern of the particles (FIG. 6), and the local elemental analysis EDS spectrum of the particles (FIG. 7). As recognized from the electron diffraction pattern in which an electron beam was directed to a center of the respective particle, the bright field micrographic image was such an image as obtained by transmitting an electron beam in parallel with the direction of a zone axis [u, v, w] = [0, 1, 1] of the lithium iron phosphate particles having an olivine type structure, and it was confirmed that the surface of the respective particle was formed of an amorphous phase. As a result of subjecting the amorphous phase to EDS analysis, it was confirmed that segregation of C and Si was present therein (Cu was detected from a microgrid on which the sample was placed). The particles which were present in the other portions of the same sample were observed in the same manner. As a result, it was confirmed that segregation of C and Si was present therein, and no segregation of the other elements was detected.

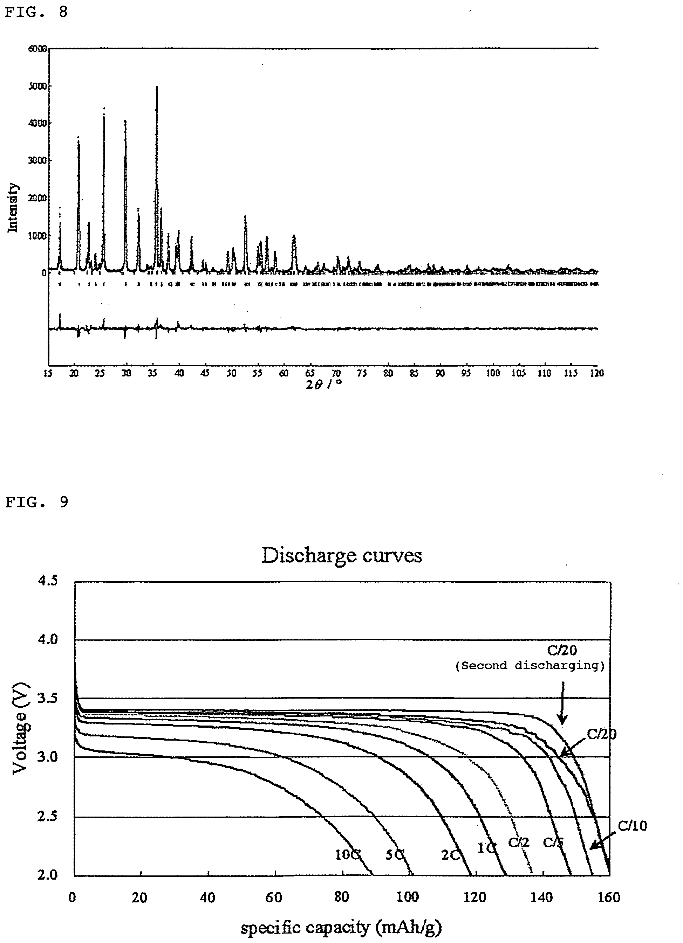

FIG. 8 shows the results of Rietveld analysis of an X-ray diffraction pattern of the particles obtained in Example 7. The dotted line in FIG. 8 represents a diffraction pattern of the actually measured value, whereas the curved line therein represents a diffraction pattern of the calculated value. The laterally extending linear waveform shown in a lowermost portion of FIG. 8 represents a difference between the actually measured value and the calculated value of the diffraction patterns. As the curve showing the difference between the actually measured value and the calculated value becomes closer to a straight line, these values are more consistent with each other. The bar-like plots between the diffraction patterns and the linear waveform represent peak positions of Li₃PO₄ on an upper side row thereof, and peak positions of LiFePO₄ on a lower side row thereof. The other diffraction peaks were not observed. The data used above had a reliability factor of Rwp = 11.93 and S = 1.48 and, therefore, had a relatively high reliability. No other crystal phases were recognized. The samples of the particles obtained in Examples 1 to 8 all were subjected to the same analysis as described above. As a result, it was confirmed that no impurity crystal phases other than Li₃PO₄ were observed, and no segregation of crystalline compounds owing to the additive elements were detected.

### Example 6:

The same experiments as defined in Examples 4, 5 and 7 were conducted as shown in Table 2 except that a given amount of the carbon-containing additive was added after the second step, and the obtained particles were subjected to heat treatment only one time without conducting any calcination, pulverization and mixing (procedure A) after sintering. The reaction system was retained in hydrogen at 400°C for 2 hr, and then after replacing hydrogen with N₂, the reaction system was further retained at 650°C for 2 hr. As a result, similarly to the other Examples, the obtained particles were fine particles having an olivine type structure, and the compositional ratios between Li, Fe and P as well as the compositional ratios between all of the additive elements except for the additive element C, and Fe were consistent with those of the first step within a measuring error range of 3%.

### Comparative Example 1:

The first step and the second step were carried out under the conditions shown in Table 2 in the same manner as defined in Example 1, and the resulting particles were subjected to calcination, pulverization, mixing, addition of carbon source and re-sintering. Although the lithium phosphate having a fine particle diameter was obtained, the density of a molded product obtained therefrom was low.

### Comparative Example 2:

Under the conditions as shown in Table 2, the first step was carried out in the same manner as defined in Example 4, but without via the second step, the resulting particles were mixed with a given amount of the carbon-containing additive using an attritor (step A) and then subjected to heat treatment in the third step. Although the obtained particles had an olivine type structure, the particles comprised a large amount of Fe³⁺ as an impurity, were not fine particles, and had a high electric resistivity.

### Comparative Example 3:

Under the conditions as shown in Table 2, the first step was carried out in the same manner as defined in Example 1, and the resulting particles were mixed with a given amount of the carbon-containing additive using an attritor (step A) and then subjected to the second and third steps to conduct the pulverization, mixing and then re-sintering thereof (procedure A). Since the compositional ratios between Li, Fe and P in the first step were out of the range defined by the present invention, the obtained particles had a small specific surface area, a small residual carbon content, a large amount of impurity crystal phase of Li₃PO₄, and a large crystallite size.

### Comparative Example 4:

Under the conditions as shown in Table 2, the first step was carried out in the same manner as defined in Example 1, and the resulting particles were mixed with a given amount of the carbon-containing additive using an attritor and then subjected, without via the second step, to the third steps to obtain lithium iron phosphate particles. As a result, it was confirmed that the resulting particles had a high residual sulfur content and were coarse particles.

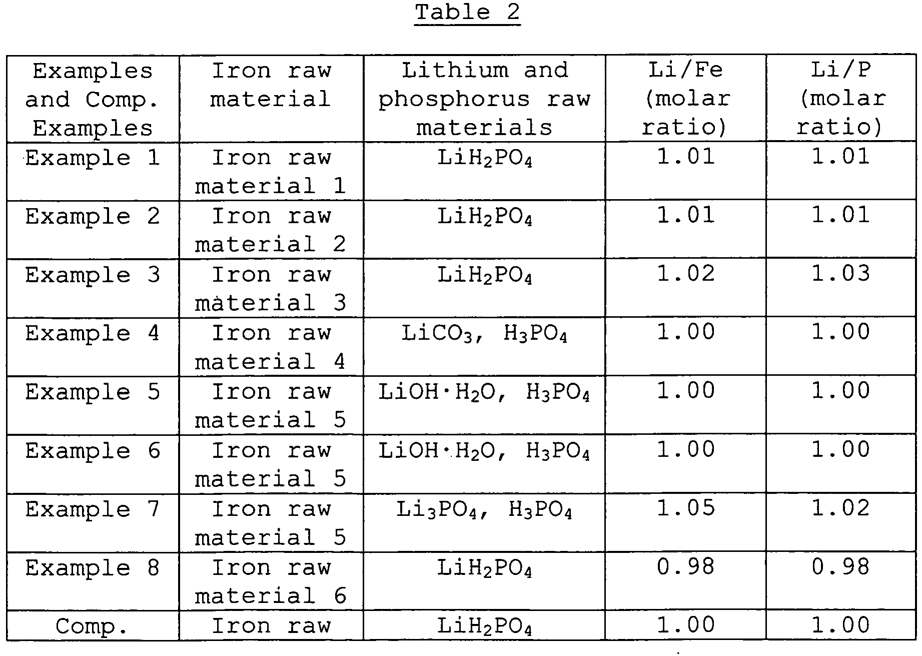

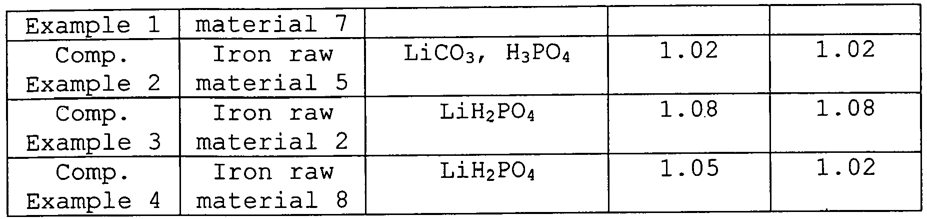

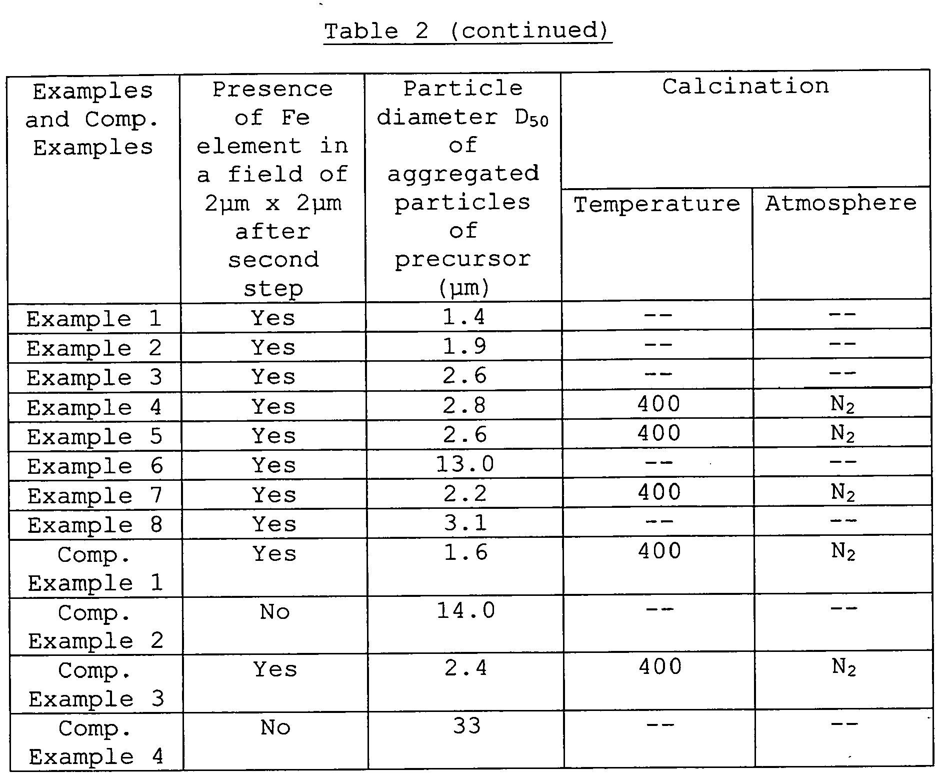

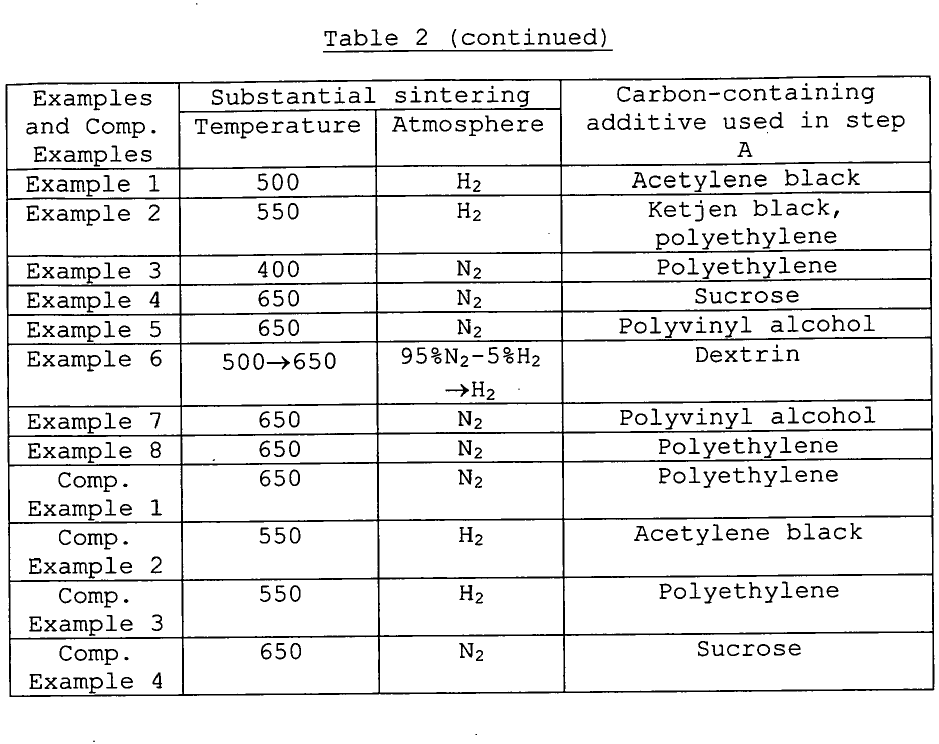

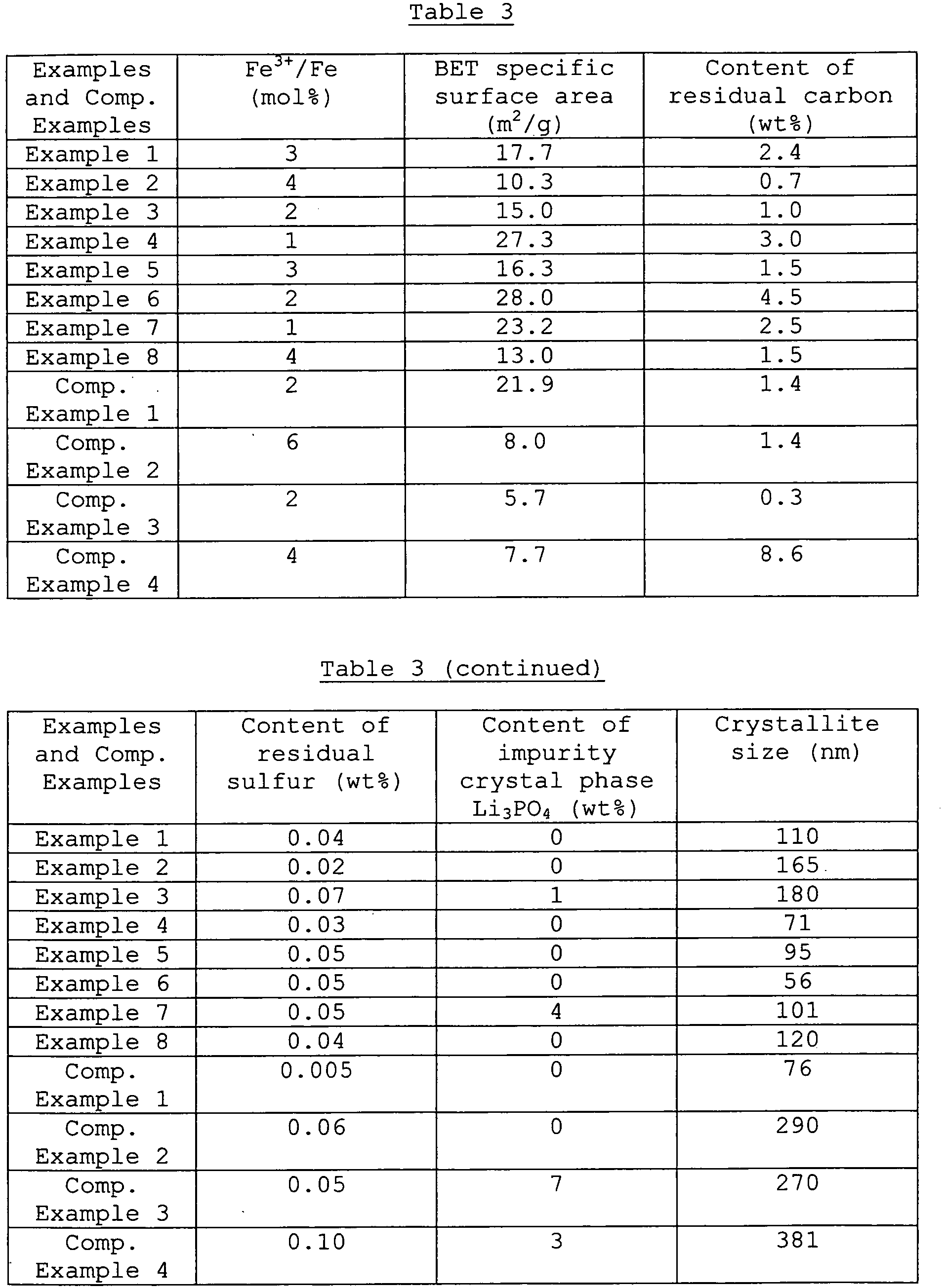

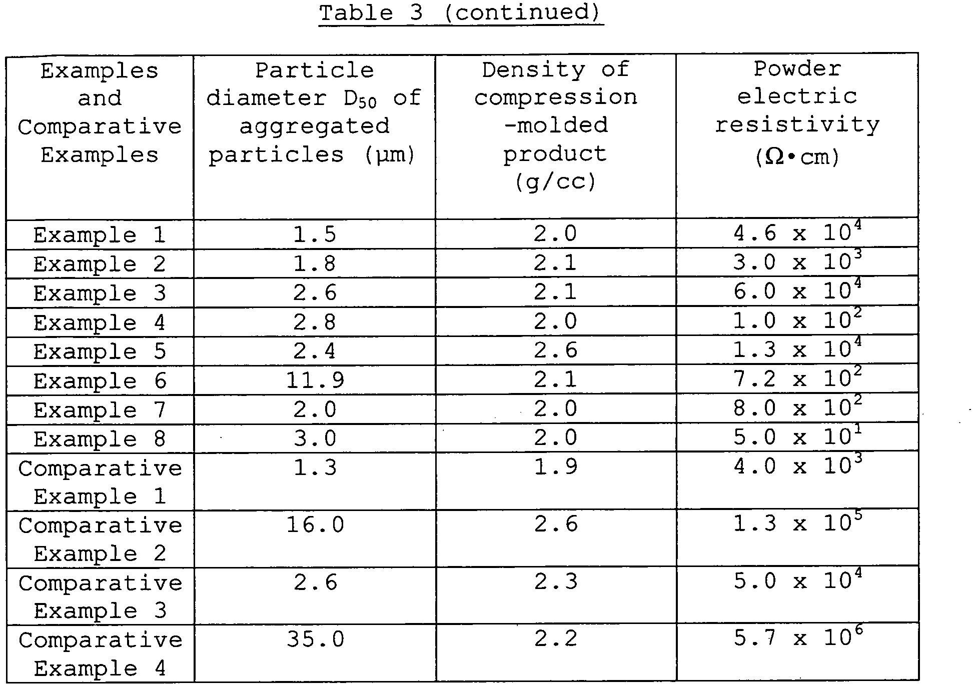

Next, an electrode slurry prepared by using the lithium iron phosphate particles having an olivine type structure obtained in the respective Examples of the present invention and Comparative Examples as a positive electrode active material and adjusting the ratio between the active material: Ketjen Black: PVdF to 9:1:1 (% by weight), was applied onto an Al foil current collector using a doctor blade having a gap of 100 µm. After drying, the resulting sheet was pressed under 3 t/cm² and blanked into 2 cm². The densities of the respective positive electrodes formed on the current collector are shown in Table 4. Also, the properties of the respective secondary batteries obtained by using the thus obtained sheets as a positive electrode sheet are shown in Table 4.

**Table 4**

| Examples and Comp. Examples | Density of positive electrode (g/cc) | Discharge capacity at 25° C (mAh/g) | | |
|---|---|---|---|---|
| | | 0.1C | 1C | 5C |
| Example 1 | 1.8 | 155 | 131 | 91 |
| Example 2 | 1.9 | 155 | 125 | 90 |
| Example 3 | 2.0 | 150 | 121 | 80 |
| Example 4 | 1.8 | 158 | 120 | 81 |
| Example 5 | 2.3 | 151 | 121 | 88 |
| Example 6 | 1.8 | 152 | 122 | 98 |
| Example 7 | 1.9 | 168 | 152 | 123 |
| Example 8 | 1.8 | 153 | 130 | 1-01 |
| Comp. Example 1 | 1.7 | 152 | 132 | 41 |
| Comp. Example 2 | 2.3 | 87 | 40.8 | 2 |
| Comp. Example 3 | 2.1 | 117 | 85 | 0 |
| Comp. Example 4 | 1.9 | 136.3 | 113.7 | 88 |

From the cell properties of the respective Examples as shown in Table 4, it was recognized that the lithium iron phosphate particles having an olivine type structure according to the present invention can satisfy a high positive electrode density and high secondary battery characteristics.

In the cell properties of the respective Comparative Examples as shown in Table 4, the positive electrode active material particles having a low compression molded product density as obtained in Comparative Example 1 also had a low positive electrode density. It is considered that the low discharge capacity as measured under 5C was caused owing to no effective influence attained by addition of the additives. Almost all of the particles obtained in Comparative Examples 2 to 4 which had a large crystallite size exhibited a low discharge capacity. In Comparative Example 4, the capacity deterioration rate of the particles obtained therein was also high. It is considered that the high capacity deterioration rate was caused by insufficient surface modification of the additives and insufficient uniformity of the solid solution formed.

Meanwhile, the cell using the particles obtained in Example 1 had a capacity deterioration rate (%) of 3% as measured under 0.1 C and a capacity deterioration rate (%) of 1% as measured under 1 C. On the other hand, the cell using the particles obtained in Comparative Example 4 had a capacity deterioration rate (%) of 12% as measured under 0.1 C and a capacity deterioration rate (%) of 6% as measured under 1 C. Therefore, it was confirmed that the secondary battery according to the present invention had an excellent capacity retention rate.

Next, there are shown the film thicknesses and densities of the respective positive electrodes produced in the form of a sheet while varying an electrode compositional ratio of the active material obtained in Example 5, as well as cell characteristics of the respective secondary batteries obtained by using the positive electrode sheets. The film thickness of the positive electrode used herein means the value obtained by subtracting the thickness of the Al foil current collector included in the positive electrode sheet from the whole thickness of the positive electrode sheet, and the film thickness was controlled by adjusting an amount of the solvent added upon formation of the coating solution and a depth of the grooved gap of the doctor blade. Also, as the carbon added, there was used a mixture prepared by mixing acetylene black and graphite "KS-6" at a weight ratio of 1:1. As the amounts of PVDF and carbon added were increased, the density of the positive electrode was lowered. However, all of these electrode compositions exhibited high secondary battery characteristics.

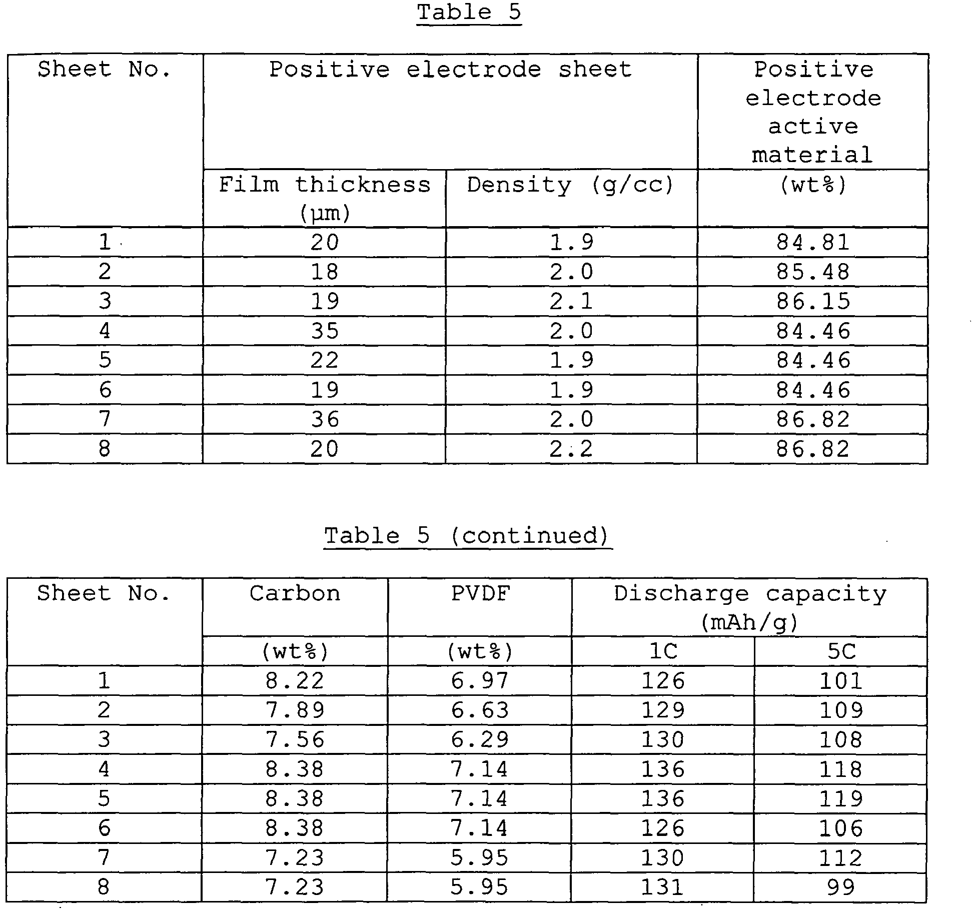

Finally, the discharge characteristic of the sheet No. 2 shown in Table 4 is shown in FIG. 9. The discharge characteristic was measured by sequentially subjecting the sheet to discharging under the current condition in the order of C/20, C/10, ...., and 10C, and finally to the second discharging under C/20. As a result, it was confirmed that the obtained discharge curve was relatively excellent, and the other sheets also had a similar discharge curve to that of the sheet No. 2.

### Example 9:

Ascorbic acid was added to the same slurry of the Li, P and Fe raw materials as used in Example 6 (the concentration of solid components therein was adjusted to 35% by weight) such that the amount of ascorbic acid added was 5% by weight based on the weight of LiFePO₄ produced, and the resulting mixture was reacted at 40°C for 3 hr to obtain a slurry having a pH of 5. The resulting slurry was dried at 70°C, and then the dried product was subjected to the second and third steps in the same manner as defined in Example 6. As a result of observing the mixture obtained by precision mixing after the second step using SEM, it was confirmed that the amount of the Fe element being present in a visual field of 2 µm x 2 µm was not less than 19/20, and the particle diameter D₅₀ of aggregated particles of the precursor was 3.5 µm.

### Example 10:

Ascorbic acid and sucrose were added to the same slurry of the Li, P and Fe raw materials as used in Example 6 (the concentration of solid components therein was adjusted to 50% by weight) such that the amount of each of ascorbic acid and sucrose added was 5% by weight on the weight of LiFePO₄ produced, and the resulting mixture was reacted at room temperature (25°C) for one day to obtain a paste comprising Li, P and Fe. The resulting paste was dried at 70°C and then subjected to the second and third steps in the same manner as defined in Example 6. As a result of observing the mixture obtained by precision mixing after the second step using SEM, it was confirmed that the amount of the Fe element being present in a visual field of 2 µm x 2 µm was not less than 19/20, and the particle diameter D₅₀ of aggregated particles of the precursor was 3.1 µm.

The properties of the respective lithium iron phosphate particles having an olivine type structure obtained in Examples 9 and 10 as well as cell characteristics thereof are shown in Table 6. The cell characteristics were evaluated by producing a coin cell in the same manner as described in Table 4.

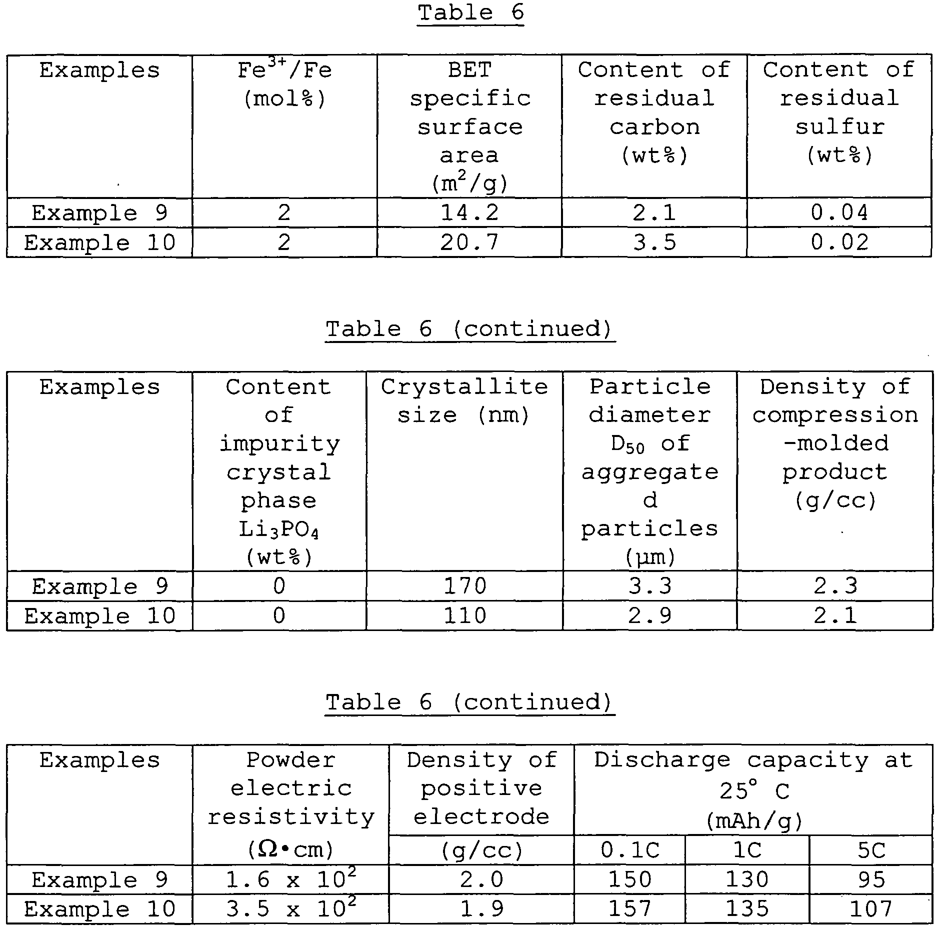

Form the above results, it was recognized that the process for producing the lithium iron phosphate particles having an olivine type structure according to the present invention is a production process having low production costs and a less environmental burden. In addition, it was confirmed that the lithium iron phosphate particles having an olivine type structure according to the present invention are capable of producing a positive electrode sheet having a high packing property, and the secondary battery obtained by using the positive electrode sheet exhibits a high capacity even in current load characteristics, and can be used in repeated charge and discharge cycles to a sufficient extent.

### INDUSTRIAL APPLICABILITY

In accordance with the present invention, by using the lithium iron phosphate particles having an olivine type structure according to the present invention which are produced at low costs by the method having a less environmental burden, as a positive electrode active material for secondary batteries, it is possible to obtain a non-aqueous solvent-based secondary battery which can exhibit a high energy density per unit volume and a high capacity even in high current load characteristics, and can be used in repeated charge and discharge cycles to a sufficient extent.

## Claims

1. A process for producing lithium iron phosphate particles having an olivine type structure, comprising:
a first step of mixing an iron oxide or an iron oxide hydroxide as an iron raw material which comprises at least one element selected from the group consisting of Na, Mg, Al, Si, Cr, Mn and Ni in an amount of 0.1 to 2 mol% for each element based on Fe, and a carbon element C in an amount of 5 to 10 mol% based on Fe, and has a content of Fe²⁺ of not more than 40 mol% based on an amount of Fe and wherein the iron raw material has an average primary particle diameter of 5 to 300 nm, with a lithium raw material and a phosphorus raw material;
a second step of controlling a particle diameter of aggregated particle in the resulting mixture to 0.3 to 5.0 µm; and
a third step of sintering the mixture obtained in the second step in an inert gas or reducing gas atmosphere having an oxygen concentration of not more than 0.1% at a temperature of 250 to 750°C.

2. A process for producing lithium iron phosphate particles having an olivine type structure according to claim 1, wherein the iron raw material comprises at least one element selected from the group consisting of Na, Mg, Al, Si, Cr, Mn and Ni in an amount of 0.1 to 2 mol% for each element based on Fe with the proviso that a total amount of the seven elements is 1.5 to 4 mol% based on Fe, and a carbon element C in an amount of 5 to 10 mol% based on Fe, and includes at least one compound selected from the group consisting of Fe₃O₄, α-FeOOH, γ-FeOOH and δ-FeOOH which has an average primary particle diameter of 5 to 300 nm.

3. A process for producing lithium iron phosphate particles having an olivine type structure according to claim 2, wherein the iron raw material comprises at least one element selected from the group consisting of Na, Mg, Al, Si, Cr, Mn and Ni in an amount of 0.1 to 2 mol% for each element based on Fe with the proviso that a total amount of the seven elements is 1.5 to 4 mol% based on Fe, and a carbon element C in an amount of 5 to 10 mol% based on Fe, and the iron raw material is in the form of an acicular iron raw material having an average primary particle diameter of 5 to 300 nm and an aspect ratio of a major axis diameter to a minor axis diameter of not less than 2.

4. A process for producing lithium iron phosphate particles having an olivine type structure according to any one of claims 1 to 3, wherein the additive element C in the iron raw material is present in the form of an organic substance capable of reducing Fe³⁺ to Fe²⁺ in an inert gas atmosphere having an oxygen concentration of not more than 0.1%.

5. A process for producing lithium iron phosphate particles having an olivine type structure according to any one of claims 1 to 4, further comprising a step A of mixing at least one material selected from the group consisting of a conductive carbon, an organic substance having a capability of reducing Fe³⁺ to Fe²⁺ and an organic binder, which serve as an electronic conduction assistant for the lithium iron phosphate particles produced, a reducing agent for reducing Fe³⁺ in the iron raw material to Fe²⁺ and a controlling agent for adjusting agglomerates diameter of a precursor of the particles to 0.3 to 30 µm, respectively, the step A being carried out either during the second step or immediately before initiation of the third step.

6. A process for producing lithium iron phosphate particles having an olivine type structure according to any one of claims 1 to 5, wherein after completion of the third step, the resulting reaction product comprising lithium, iron and phosphorus as main components is subjected to re-pulverization and then re-precision mixing, and the resulting mixture obtained by the re-precision mixing is re-mixed with the at least one material selected from the group consisting of the conductive carbon, the organic substance having a capability of reducing Fe³⁺ to Fe²⁺ and the organic binder, and then re-sintered in an inert gas or reducing gas atmosphere having an oxygen concentration of not more than 0.1% at a temperature of 250 to 750°C.

7. A process for producing lithium iron phosphate particles having an olivine type structure according to any one of claims 1 to 6, wherein in the first step of mixing the respective raw materials, a slurry of the raw materials is controlled such that a concentration of solid components of the raw materials therein is not less than 30% by weight; ascorbic acid or sucrose is added to the slurry in an amount of 1 to 25% by weight based on LiFePO₄ as produced; and the resulting slurry is mixed at a temperature of not higher than 50°C to adjust a pH value of the slurry ranging from 4 to 8.

8. Lithium iron phosphate particles having an olivine type structure, comprising lithium and phosphorus in such an amount that a molar ratio of each of the lithium and phosphorus to iron is 0.95 to 1.05; and having a content of Fe³⁺ of less than 5 mol% based on an amount of Fe, a BET specific surface area of 6 to 30 m²/g, a residual carbon content of 0.5 to 8% by weight, a residual sulfur content of not more than 0.08% by weight, a content of Li₃PO₄ as an crystal phase (impurity phase) other than the olivine type structure, of not more than 5% by weight, a crystallite size of 25 to 300 nm, agglomerates diameter of 0.3 to 20 µm, a density of 2.0 to 2.8 g/cc when formed into a compression-molded product, and a powder electric resistance of 1 to 1.0 x 10⁵ Ωocm, said particles being obtainable by a process as defined in any one of claims 1 to 7.

9. A positive electrode material sheet for secondary batteries having a density of not less than 1.8 g/cc, which comprises a composite material comprising the lithium iron phosphate particles having an olivine type structure as defined in claim 8, 0.1 to 10% by weight of carbon as a conductive assistant, and 1 to 10% by weight of a binder.

10. A secondary battery produced by using the positive electrode material sheet for secondary batteries as defined in claim 9.

11. Use of the lithium iron phosphate particles according to claim 8 as a positive electrode active material for a non-aqueous solvent-based secondary battery.

## Patentansprüche

1. Verfahren zum Herstellen von Lithiumeisenphosphat-Partikeln mit einer Olivin-artigen Struktur, umfassend:
einen ersten Schritt eines Mischens eines Eisenoxids oder an Eisenoxidhydroxid als ein Eisenrohmaterial, das mindestens ein Element umfasst, ausgewählt aus der Gruppe bestehend aus Na, Mg, Al, Si, Cr, Mn und Ni in einer Menge von 0,1 bis 2 Mol-% für jedes Element basiert auf Fe, und einem Kohlenstoffelement C in einer Menge von 5 bis 10 Mol-% basiert auf Fe, und das einen Gehalt an Fe²⁺ von nicht mehr als 40 Mol-% basiert auf einer Menge an Fe umfasst, und wobei das Eisenrohmaterial einen durchschnittlichen Primärpartikeldurchmesser von 5 bis 300 nm aufweist, mit einem Lithium-Rohmaterial und einem Phosphor-Rohmaterial;
einen zweiten Schritt eines Steuerns eines Partikeldurchmessers von aggregierten Partikeln in dem resultierenden Gemisch auf 0,3 bis 5,0 µm; und
einen dritten Schritt eines Sinterns des im zweiten Schritt erlangten Gemischs in einer Inertgas- oder Reduziergasatmosphäre mit einer Sauerstoffkonzentration von nicht mehr als 0,1 % bei einer Temperatur von 250 bis 750 °C.

2. Verfahren zum Herstellen von Lithiumeisenphosphat-Partikeln mit einer Olivin-artigen Struktur nach Anspruch 1, wobei das Eisenrohmaterial mindestens ein Element umfasst, ausgewählt aus der Gruppe bestehend aus Na, Mg, Al, Si, Cr, Mn und Ni in einer Menge von 0,1 bis 2 Mol-% für jedes Element basiert auf Fe, mit der Maßgabe, dass eine Gesamtmenge der sieben Elemente 1,5 bis 4 Mol-% basiert auf Fe ist, und einem Kohlenstoffelement C in einer Menge von 5 bis 10 Mol-% basiert auf Fe, und mindestens eine Verbindung enthält, ausgewählt aus der Gruppe bestehend aus Fe₃O₄, α-FeOOH, γ-FeOOH und δ-FeOOH, die einen Primärpartikeldurchmesser von 5 bis 300 nm aufweist.

3. Verfahren zum Herstellen von Lithiumeisenphosphat-Partikeln mit einer Olivin-artigen Struktur nach Anspruch 2, wobei das Eisenrohmaterial mindestens ein Element umfasst, ausgewählt aus der Gruppe bestehend aus Na, Mg, Al, Si, Cr, Mn und Ni in einer Menge von 0,1 bis 2 Mol-% für jedes Element basiert auf Fe, mit der Maßgabe, dass eine Gesamtmenge der sieben Elemente 1,5 bis 4 Mol-% basiert auf Fe ist, und einem Kohlenstoffelement C in einer Menge von 5 bis 10 Mol-% basiert auf Fe, und das Eisenrohmaterial in der Form eines nadelförmigen Eisenrohmaterial mit einem durchschnittlichen Primärpartikeldurchmesser von 5 bis 300 nm und einem Aspektverhältnis eines Durchmessers der größeren Achse zu einem Durchmesser der kleinere Achse von nicht weniger als 2 ist.

4. Verfahren zum Herstellen von Lithiumeisenphosphat-Partikeln mit einer Olivin-artigen Struktur nach einem der Ansprüche 1 bis 3, wobei das Zusatzelement C in dem Eisenrohmaterial in der Form einer organischen Substanz vorhanden ist, die in der Lage ist, Fe³⁺ in einer Inertgasatmosphäre mit einer Sauerstoffkonzentration von nicht mehr als 0,1 % zu Fe²⁺ zu reduzieren.

5. Verfahren zum Herstellen von Lithiumeisenphosphat-Partikeln mit einer Olivin-artigen Struktur nach einem der Ansprüche 1 bis 4, ferner umfassend einen Schritt A eines Mischens von mindestens einem Material ausgewählt aus der Gruppe bestehend aus einem leitfähigen Kohlenstoff, einer organischen Substanz vorhanden ist, die in der Lage ist, Fe³⁺ zu Fe²⁺ zu reduzieren, und einem organischen Bindemittel, das als ein elektronischer Leitassistent für die hergestellten Lithiumeisenphosphat-Partikel dient, einem Reduziermittel zum Reduzieren von Fe³⁺ in dem Eisenrohmaterial zu Fe²⁺, einem Regulierungsmittel zum Anpassen des Agglomeratdurchmessers eines Vorläufers der Partikel auf jeweils 0,3 bis 30 µm, wobei der Schritt A entweder während des zweiten Schritts oder direkt vor Beginn des dritten Schritts durchgeführt wird.

6. Verfahren zum Herstellen von Lithiumeisenphosphat-Partikeln mit einer Olivin-artigen Struktur nach einem der Ansprüche 1 bis 5, wobei nach Vervollständigung des dritten Schritts das resultierende Reaktionsprodukt umfassend Lithium, Eisen und Phosphor als Hauptbestandteile einer erneuten Pulverisierung und dann einem erneuten Präzisionsmischen unterzogen wird, und das resultierende Gemisch, das durch das erneute Präzisionsmischen erlangt wird, erneut mit dem mindestens einen Material gemischt wird, das ausgewählt ist aus der Gruppe bestehend aus dem leitfähigen Kohlenstoff, wobei die organische Substanz eine Fähigkeit aufweist, Fe³⁺ zu Fe²⁺ zu reduzieren, und dem organischen Bindemittel, und dann erneut in einer Inertgas- oder Reduziergasatmosphäre mit einer Sauerstoffkonzentration von nicht mehr als 0,1 % bei einer Temperatur von 250 bis 750 °C gesintert wird.

7. Verfahren zum Herstellen von Lithiumeisenphosphat-Partikeln mit einer Olivin-artigen Struktur nach einem der Ansprüche 1 bis 6, wobei in dem ersten Schritt eines Mischens der jeweiligen Rohmaterialien eine Schlämme der Rohmaterialien so reguliert wird, dass eine Konzentration von Feststoffbestandteilen der Rohmaterialien darin nicht weniger als 30 Gew.-% ist; Ascorbinsäure oder Saccharose zu der Schlämme in einer Menge von 1 bis 25 Gew.-% basiert auf dem hergestellten LiFePO₄ hinzugefügt wird; und die resultierende Schlämme bei einer Temperatur von nicht höher als 50 °C gemischt wird, um einen pH-Wert der Schlämme im Bereich von 4 bis 8 einzustellen.

8. Lithiumeisenphosphat-Partikel mit einer Olivin-artigen Struktur, umfassend Lithium und Phosphor in einer solchen Menge, dass ein Mol-Verhältnis von jedem von dem Lithium und Phosphor zu Eisen 0,95 bis 1,05 ist; und mit einem Gehalt an Fe³⁺ von weniger als 5 Mol-% basiert auf einer Menge an Fe, einer BET-spezifischen Oberfläche von 6 bis 30 m²/g, einem restlichen Kohlenstoffgehalt von 0,5 bis 8 Gew.-%, einem restlichen Schwefelgehalt von nicht mehr als 0,08 Gew.-%, einem Gehalt an Li₃PO₄ als eine Kristallphase (Unreinheitsphase), die sich von der Olivin-artigen Struktur unterscheidet, von nicht mehr als 5 Gew.-%, einer Kristallitgröße von 25 bis 300 nm, Agglomerat-Durchmesser von 0,3 bis 20 µm, einer Dichte von 2,0 bis 2,8 g/cm³ bei Ausbildung in ein druckgeformtes Produkt, und einem elektrischen Pulverwiderstand von 1 bis 1,0 x 10 Ωocm, wobei die Partikel durch ein Verfahren gemäß Definition in einem der Ansprüche 1 bis 7 erlangt werden kann.

9. Materialfolie einer positiven Elektrode für Akkumulatoren mit einer Dichte von nicht mehr als 1,8 g/cm³, die ein Verbundmaterial umfassend die Lithiumeisenphosphat-Partikel mit einer Olivin-artigen Struktur gemäß Definition in Anspruch 8, 0,1 bis 10 Gew.-% Kohlenstoff als ein Leitassistent und 1 bis 10 Gew.-% eines Bindemittels umfasst.

10. Akkumulator, der durch Verwenden der Materialfolie einer positiven Elektrode für Akkumulatoren gemäß Definition in Anspruch 9 hergestellt wird.

11. Verwendung der Lithiumeisenphosphat-Partikel nach Anspruch 8 als ein aktives Material einer positiven Elektrode für einen nicht wässrigen, lösungsmittelbasierten Akkumulator.

## Revendications

1. Procédé de production de particules de phosphate de lithium-fer ayant une structure de type olivine, comprenant :
une première étape de mélange d'un oxyde de fer ou d'un oxyde-hydroxyde de fer en tant que matière première fer qui comprend au moins un élément choisi dans le groupe constitué par Na, Mg, Al, Si, Cr, Mn et Ni en une quantité de 0,1 à 2 % en moles pour chaque élément par rapport à Fe, et un élément carbone C en une quantité de 5 à 10 % en moles par rapport à Fe, et a une teneur en Fe²⁺ inférieure ou égale à 40 % en moles par rapport une quantité de Fe, la matière première fer ayant un diamètre de particule primaire moyen de 5 à 300 nm, avec une matière première lithium et une matière première phosphore ;
une deuxième étape de régulation d'un diamètre de particule des particules agrégées dans le mélange résultant à 0,3 à 5,0 µm ; et
une troisième étape de frittage du mélange obtenu lors de la deuxième étape dans une atmosphère de gaz inerte ou de gaz réducteur ayant une concentration en oxygène inférieure ou égale à 0,1 % à une température de 250 à 750 °C.

2. Procédé de production de particules de phosphate de lithium-fer ayant une structure de type olivine selon la revendication 1, dans lequel la matière première fer comprend au moins un élément choisi dans le groupe constitué par Na, Mg, Al, Si, Cr, Mn et Ni en une quantité de 0,1 à 2 % en moles pour chaque élément par rapport à Fe, à condition qu'une quantité totale des sept éléments soit de 1,5 à 4 % en moles par rapport à Fe, et un élément carbone C en une quantité de 5 à 10 % en moles par rapport à Fe, et comprend au moins un composé choisi dans le groupe constitué par Fe₃O₄, α-FeOOH, γ-FeOOH et δ-FeOOH qui a un diamètre de particule primaire moyen de 5 à 300 nm.

3. Procédé de production de particules de phosphate de lithium-fer ayant une structure de type olivine selon la revendication 2, dans lequel la matière première fer comprend au moins un élément choisi dans le groupe constitué par Na, Mg, Al, Si, Cr, Mn et Ni en une quantité de 0,1 à 2 % en moles pour chaque élément par rapport à Fe, à condition qu'une quantité totale des sept éléments soit de 1,5 à 4 % en moles, par rapport à Fe, et un élément carbone C en une quantité de 5 à 10 % en moles par rapport à Fe, et la matière première fer est sous la forme d'une matière première fer aciculaire ayant un diamètre de particule primaire moyen de 5 à 300 nm et un rapport de longueur entre un diamètre d'axe majeur et un diamètre d'axe mineur supérieur ou égal à 2.

4. Procédé de production de particules de phosphate de lithium-fer ayant une structure de type olivine selon l'une quelconque des revendications 1 à 3, dans lequel l'élément additif C dans la matière première fer est présent sous la forme d'une substance organique capable de réduire Fe³⁺ en Fe²⁺ dans une atmosphère de gaz inerte ayant une concentration en oxygène inférieure ou égale à 0,1 %.

5. Procédé de production de particules de phosphate de lithium-fer ayant une structure de type olivine selon l'une quelconque des revendications 1 à 4, comprenant en outre une étape A de mélange d'au moins un matériau choisi dans le groupe constitué par un carbone conducteur, une substance organique ayant une capacité de réduction de Fe³⁺ en Fe²⁺ et un liant organique, qui sert d'assistant de conduction électronique pour les particules de phosphate de lithium-fer produites, un agent réducteur pour la réduction de Fe³⁺ dans la matière première fer en Fe²⁺, et un agent de régulation pour ajuster un diamètre des agglomérats d'un précurseur des particules à 0,3 à 30 µm, respectivement, l'étape A étant réalisée soit pendant la deuxième étape ou immédiatement avant l'initiation de la troisième étape.

6. Procédé de production de particules de phosphate de lithium-ion ayant une structure de type olivine selon l'une quelconque des revendications 1 à 5, dans lequel, après la complétion de la troisième étape, le produit de réaction résultant comprenant du lithium, du fer et du phosphore en tant que composants principaux est soumis à une nouvelle pulvérisation, puis à un nouveau mélange de précision, et le mélange résultant obtenu par le nouveau mélange de précision est de nouveau mélangé avec ledit au moins un matériau choisi dans le groupe constitué par le carbone conducteur, la substance organique ayant une capacité de réduction de Fe³⁺ en Fe²⁺, et le liant organique, puis de nouveau fritté dans une atmosphère de gaz inerte ou de gaz réducteur ayant une concentration en oxygène inférieure ou égale à 0,1 % à une température de 250 à 750 °C.

7. Procédé de production de particules de phosphate de lithium-fer ayant une structure de type olivine selon l'une quelconque des revendications 1 à 6, dans lequel, dans la première étape de mélange des matières premières respectives, une suspension des matières premières est régulée de telle sorte qu'une concentration de composants solides des matières premières dans celle-ci soit supérieure ou égale à 30 % en poids ; de l'acide ascorbique ou du sucrose est ajouté à la suspension en une quantité de 1 à 25 % en poids par rapport à LiFePO₄ tel que produit; et la suspension résultante est mélangée à une température inférieure ou égale à 50 °C pour ajuster une valeur de pH de la suspension de 4 à 8.

8. Particules de phosphate de lithium-fer ayant une structure de type olivine, comprenant du lithium et du phosphore en une quantité telle qu'un rapport molaire respectivement entre le lithium et le phosphore et le fer est de 0,95 à 1,05 ; et ayant une teneur en Fe³⁺ inférieure à 5 % en moles par rapport à une quantité de Fe, une aire de surface spécifique BET de 6 à 30 m²/g, une teneur en carbone résiduelle de 0,5 à 8 % en poids, une teneur en soufre résiduelle inférieure ou égale à 0,08 % en poids, une teneur en Li₃PO₄ en tant que phase cristalline (phase d'impuretés) autre que la structure de type olivine inférieure ou égale à 5 % en poids, une taille de cristallites de 25 à 300 nm, un diamètre d'agglomérats de 0,3 à 20 µm, une densité de 2,0 à 2,8 g/cc lorsqu'elles sont mises sous la forme d'un produit moulé par compression, et une résistance électrique en poudre de 1 à 1,0 x 10⁵ Ωocm, lesdites particules pouvant être obtenues par un procédé tel que défini dans l'une quelconque des revendications 1 à 7.

9. Feuille de matériau d'électrode positive pour batteries secondaires ayant une densité supérieure ou égale à 1,8 g/cc, qui comprend un matériau composite comprenant les particules de phosphate de lithium-fer ayant une structure de type olivine telles que définies dans la revendication 8, 0,1 à 10 % en poids de carbone en tant qu'assistant conducteur, et 1 à 10 % en poids d'un liant.

10. Batterie secondaire produite en utilisant la feuille de matériau d'électrode positive pour batteries secondaires telle que définie dans la revendication 9.

11. Utilisation des particules de phosphate de lithium-fer selon la revendication 8 en tant que matériau actif d'électrode positive pour une batterie secondaire à base d'un solvant non aqueux.
